# EUROPEAN PATENT APPLICATION

(11) **EP 4 733 883 A1**
(43) Date of publication of application: **29.04.2026**
(21) Application number: 24843330.2
(22) Date of filing: 18.06.2024
(51) Int. Cl.: G06F 1/16, C09J 7/00

(54) **ELECTRONIC DEVICE COMPRISING ADHESIVE MEMBER AND BATTERY**

(30) Priority: 20.07.2023 KR 20230094751; 03.11.2023 KR 20230150898
(71) Applicant: Samsung Electronics Co., Ltd., Suwon-si, Gyeonggi-do 16677 (KR)
(72) Inventor: KIM, Suyoun, Suwon-si, Gyeonggi-do 16677 (KR); KWON, Kihwan, Suwon-si, Gyeonggi-do 16677 (KR); PARK, Tari, Suwon-si, Gyeonggi-do 16677 (KR); YANG, Seohoon, Suwon-si, Gyeonggi-do 16677 (KR); LEE, Jonghyun, Suwon-si, Gyeonggi-do 16677 (KR); CHO, Sujin, Suwon-si, Gyeonggi-do 16677 (KR); CHUN, Woosung, Suwon-si, Gyeonggi-do 16677 (KR)
(74) Representative: Gulde & Partner
(86) International application number: PCT/KR2024/008395
(87) International publication number: WO 2025/018609

(57) **Abstract**

According to an embodiment of the present disclosure, an electronic device may comprise a first housing, a second housing, a first battery, or a first adhesive member. The first housing may include a first sidewall or a first support member. The first battery may be disposed in the first housing. The first adhesive member may be configured to adhere the first battery to the first support member. The first adhesive member may include a first outer portion, a first inner portion, or a first protruding portion. The first outer portion may face the first sidewall. The first inner portion may face away from the first outer portion. The first protruding portion may protrude from the first outer portion toward the first sidewall.

## Description

### [Technical Field]

Various embodiments disclosed in the disclosure relate to an electronic device, and for example, relate to an electronic device including an adhesive member and a battery.

### [Background Art]

With the remarkable advancement of information and communication technology and semiconductor technology, the distribution and use of various electronic devices are rapidly increasing. In particular, recent electronic devices are being developed to be portable and capable of communication.

An electronic device may refer to a device that performs a specific function according to a mounted program, such as home appliances, electronic organizers, portable multimedia players, mobile communication terminals, tablet PCs, video/audio devices, desktop/laptop computers, or vehicle navigation systems. For example, such electronic devices may output stored information as sound or video. As the integration density of electronic devices increases and ultra-high-speed, high-capacity wireless communication becomes common, recently, various functions may be mounted on a single electronic device such as a mobile communication terminal. For example, not only a communication function but also an entertainment function such as a game, a multimedia function such as music/video playback, a communication and security function for mobile banking, and a schedule management or electronic wallet function are being integrated into a single electronic device. These electronic devices have been downsized to be conveniently carried by users.

As mobile communication services extend up to multimedia service sectors, the display of the electronic device may be increased to allow the user satisfactory use of multimedia services as well as voice call or text messaging services. Accordingly, a foldable flexible display may be disposed on the entire area of the housing structure separated to be foldable.

The above-described information may be provided as related art for the purpose of helping understanding of the disclosure. No claim or determination is made as to whether any of the foregoing is applicable as background art in relation to the disclosure.

### [Detailed Description of the Invention]

### [Technical Solution]

According to an embodiment of the disclosure, an electronic device may include a first housing, a second housing, a first battery, or a first adhesive member. The first housing may include a first side wall or a first support member. The first support member may be connected to the first side wall. The first battery may be disposed inside the first housing. The first adhesive member may be configured to adhere the first battery to the first support member. The first adhesive member may include a first outer portion, a first inner portion, or a first protruding portion. The first outer portion may face the first side wall. The first inner portion may face opposite to the first outer portion. The first protruding portion may protrude from the first outer portion toward the first side wall.

According to an embodiment of the disclosure, an electronic device may include a foldable housing, a flexible display, or a battery assembly. The flexible display may be disposed on the foldable housing. The battery assembly may be disposed inside the foldable housing. The battery assembly may include a battery, an adhesive member, or a film member. The adhesive member may be configured to adhere the battery to the foldable housing. The film member may surround at least a portion of the battery.

### [Brief Description of Drawings]

FIG. 1 is a block diagram illustrating an electronic device in a network environment according to an embodiment.
FIG. 2 is a view illustrating an unfolded state of an electronic device according to an embodiment of the disclosure.
FIG. 3 is a view illustrating a folded state of an electronic device according to an embodiment of the disclosure.
FIG. 4 is an exploded perspective view illustrating an electronic device according to an embodiment of the disclosure.
FIG. 5 is an exploded perspective view illustrating an electronic device according to an embodiment of the disclosure.
FIG. 6 is a plan view illustrating an electronic device according to an embodiment of the disclosure.
FIG. 7 is an assembled perspective view illustrating an electronic device according to an embodiment of the disclosure.
FIG. 8A is a perspective view illustrating a first battery according to an embodiment of the disclosure.
FIG. 8B is a cross-sectional view taken along line A-A' of FIG. 8A according to an embodiment of the disclosure.
FIG. 9 is a plan view illustrating a first film member according to an embodiment of the disclosure.
FIG. 10 is an exploded perspective view illustrating an electronic device according to an embodiment of the disclosure.
FIG. 11 is a plan view illustrating an electronic device according to an embodiment of the disclosure.
FIG. 12 is an assembled perspective view illustrating an electronic device according to an embodiment of the disclosure.
FIG. 13A is a perspective view illustrating a second battery according to an embodiment of the disclosure.
FIG. 13B is a cross-sectional view taken along line B-B' of FIG. 13A according to an embodiment of the disclosure.
FIG. 14 is a plan view illustrating a second film member according to an embodiment of the disclosure.
FIG. 15 is a plan view illustrating an electronic device according to an embodiment of the disclosure.

### [Mode for Carrying out the Invention]

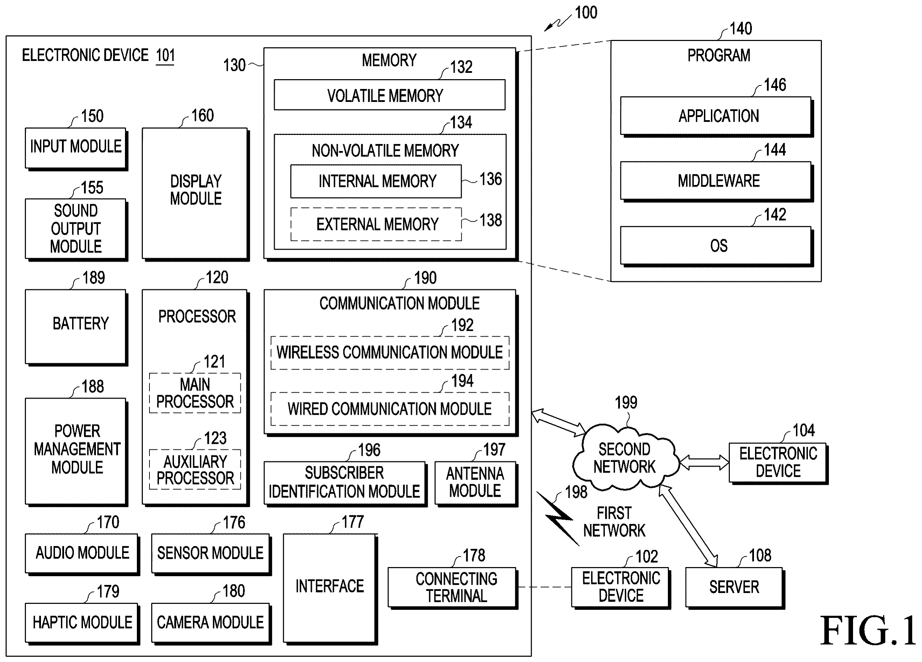

FIG. 1 is a block diagram illustrating an electronic device 101 in a network environment 100, according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

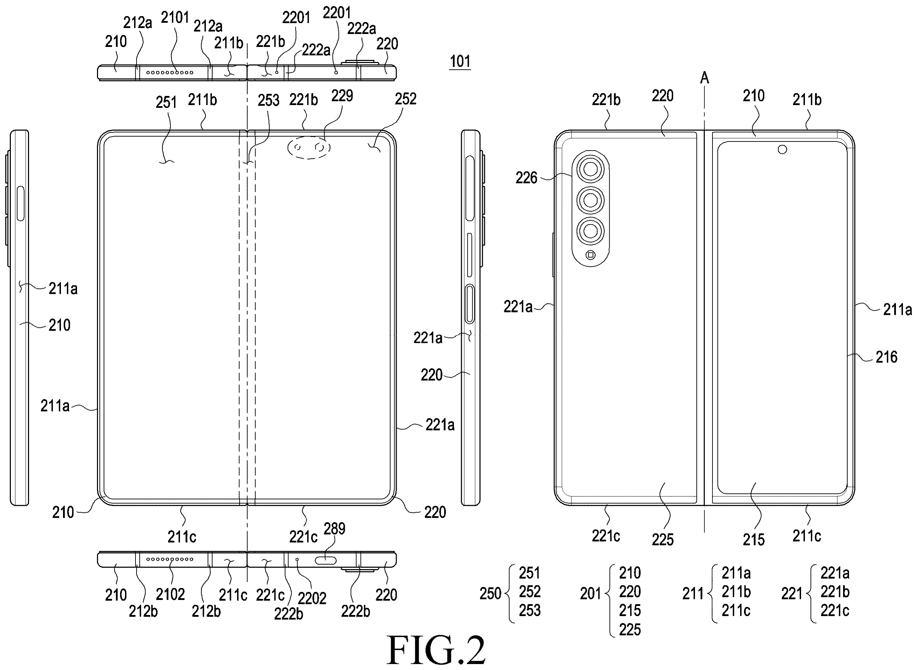

FIG. 2 is a view illustrating an unfolded state of an electronic device according to an embodiment of the disclosure.

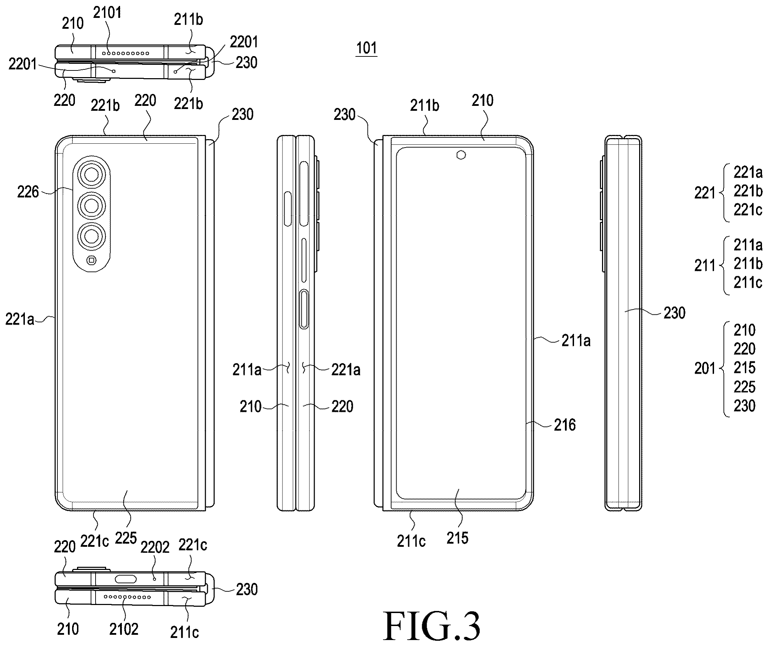

FIG. 3 is a view illustrating a folded state of an electronic device according to an embodiment of the disclosure.

FIG. 2 is a view illustrating an unfolded state among folding states of an electronic device (or a foldable electronic device) according to an embodiment of the disclosure. FIG. 3 is a view illustrating a folded state of the electronic device (or a foldable electronic device) according to an embodiment of the disclosure. The electronic device 101 of FIGS. 2 and 3, as an example of the electronic device 101 shown in FIG. 1, may be a foldable or bendable electronic device.

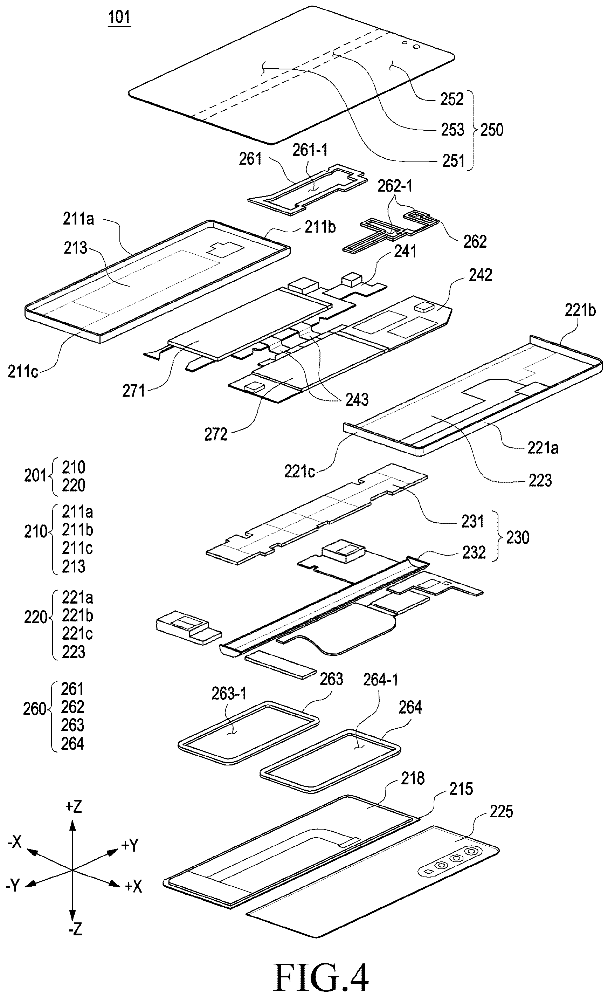

The embodiments of FIGS. 2 and 3 may be combined with the embodiment of FIG. 1 or the embodiments of FIGS. 4 to 15.

The configuration of the electronic device 101 of FIGS. 2 and 3 may be identical in whole or part to the configuration of the electronic device 101 of FIG. 1. The electronic device 101 of FIGS. 2 and 3 may be defined and/or referred to as a foldable electronic device.

Referring to FIGS. 2 and 3, an electronic device 101 may include a foldable housing 201 and a flexible or foldable display 250 (hereinafter, simply " flexible display 250") (e.g., the display module 160 of FIG. 1) disposed in a space formed by the foldable housing 201. According to an embodiment, the surface where the flexible display 250 is disposed (or the surface where the flexible display 250 is viewed from the outside of the electronic device 101) may be defined as the front surface of the electronic device 101. The opposite surface of the front surface may be defined as a rear surface of the electronic device 101. The surface surrounding the space between the front and back surfaces may be defined as a side surface of the electronic device 101. The foldable housing 201 may be defined and/or referred to as a housing.

According to an embodiment, the foldable housing 201 may include a first housing 210, a second housing 220 including a sensor area 229, a cover window 215, a rear cover 225, or a hinge assembly 230. According to an embodiment, the hinge assembly 230 may include a hinge cover (e.g., the hinge cover 232 of FIG. 4) that covers the foldable portion of the foldable housing 201. The foldable housing 201 of the electronic device 101 are not limited to the shape and coupling shown in FIGS. 2 and 3 but may rather be implemented in other shapes or via a combination and/or coupling of other components. For example, in an embodiment, the first housing 210 and the cover window 215 may be integrally formed with each other, and the second housing 220 and the rear cover 225 may be integrally formed with each other. The first housing 210 may be defined and/or referred to as a first housing portion. The second housing 220 may be defined and/or referred to as a second housing portion.

According to an embodiment, an illuminance sensor and an image sensor may be disposed in the sensor area 222. The illuminance sensor may detect the amount of light around the electronic device 101, and the image sensor may convert light incident through the camera lens into a digital signal. The illuminance sensor and the image sensor may be visually exposed to the flexible display 250. According to an embodiment, the illuminance sensor and the image sensor may not be visually exposed. For example, the camera may be configured as an under display camera (UDC). Pixels in one area of the flexible display 250 corresponding to the location of the UDC may be configured to differ from pixels in other areas, so that the image sensor and/or camera may not be visually exposed.

According to an embodiment, the first housing 210 may be connected to the hinge assembly 230 and may include a first front surface facing a first direction and a first rear surface facing a direction opposite to the first direction. The second housing 220 may be connected to the hinge assembly 230 and may include a second front surface facing a second direction and a second rear surface facing a direction opposite to the second direction. The first housing 210 may rotate about the hinge assembly 230 with respect to the second housing 220. The second housing 220 may rotate about the hinge assembly 230 with respect to the first housing 210. The electronic device 101 may transform to a folded state or an unfolded state. For example, the folded state of the electronic device 101 may be defined and/or referred to as a folded state of the foldable housing 201. The unfolded state of the electronic device 101 may be defined and/or referred to as an unfolded state of the foldable housing 201.

According to an embodiment, the first housing 210 may include a 1-1st side surface 211a disposed to be spaced apart from and parallel to the folding axis A of the hinge assembly 230 between the first front surface and the first rear surface, and the second housing 220 may include a 2-1st side surface 221a disposed to be spaced apart from and parallel to the folding axis A of the hinge assembly 230 between the second front surface and the second rear surface. Further, the first housing 210 may include a 1-2nd side surface 211b perpendicular to the 1-1st side surface 211a and having an end connected with the 1-1st side surface 211a and another end connected with the hinge assembly 230 and a 1-3rd side surface 211c perpendicular to the 1-1st side surface 211a and having an end connected with the 1-1st side surface 211a and another end connected with the hinge assembly 230 and spaced apart from and parallel to the 1-2nd side surface 211b. The second housing 220 may include a 2-2nd side surface 221b perpendicular to the 2-1st side surface 221a and having an end connected with the 2-1st side surface 221a and another end connected with the hinge assembly 230 and a 2-3rd side surface 221c perpendicular to the 2-1st side surface 221a and having an end connected with the 2-1st side surface 221a and another end connected with the hinge assembly 230 and spaced apart from and parallel to the 2-2nd side surface 221b. When the first housing 210 is folded about the hinge assembly 230 with respect to the second housing 220 (e.g., FIG. 3), the 1-1st side surface 211a may approach the 2-1st side surface 221a and, when the first housing 210 is unfolded about the hinge assembly 230 with respect to the second housing 220 (e.g., FIG. 2), the 1-1st side surface 211a may move away from the 2-1st side surface 221a.

According to an embodiment, in the fully folded state of the electronic device 101, the first front surface may face the second front surface and, in the fully unfolded state, the first direction may be identical to the second direction. In the fully unfolded state, the distance between the 1-1st side surface 211a and the 2-1st side surface 221a may be the largest.

According to an embodiment, the first housing 210 and the second housing 220 are disposed on two opposite sides of the folding axis A and be overall symmetrical in shape with respect to the folding axis A. As described below, the angle or distance between the first housing 210 and the second housing 220 may be varied depending on whether the electronic device 101 is in the unfolded state, the folded state, or the partially unfolded (or partially folded) intermediate state.

According to an embodiment, as shown in FIG. 2, the first housing 210 and the second housing 220 together may form a recess to receive the flexible display 250. According to an embodiment, at least a portion of the first housing 210 and the second housing 220 may be formed of a metallic material or a non-metallic material having rigidity of a selected size for supporting the flexible display 250. At least a portion formed of metal may provide a ground plane of the electronic device 101 and may be electrically connected with a ground line formed on the printed circuit board disposed in the foldable housing 201.

According to an embodiment, a protection member may be disposed outside the flexible display 250. The protection member may be formed integrally with the side surface of the foldable housing 201 or as a separate structure. The flexible display 250 may not adhere to the side surface of the foldable housing 201 and/or the protection member. A gap may be formed between the flexible display 250 and the protection member. The protection member may be configured to cover the internal configuration of the electronic device 101 from the outside or to protect the internal configuration of the electronic device 101 from external impact. According to an embodiment, the protection member may be configured to cover the line disposed on the flexible display 250 from the outside or to protect it from an external impact.

According to an embodiment, a cover window 215 is disposed on one side of a folding axis A on a rear surface of an electronic device 101 and may have, e.g., a substantially rectangular periphery, and the periphery may be surrounded by a first housing 210. Similarly, the rear cover 225 is disposed on another side of the folding axis A on the rear surface of the electronic device 101, and the periphery thereof may be surrounded by a second housing 220.

According to an embodiment, the cover window 215 and the rear cover 225 may have a substantially symmetrical shape about the folding axis A. However, the cover window 215 and the rear cover 225 do not necessarily have mutually symmetrical shapes, and in an embodiment, the electronic device 101 may include a cover window 215 and a rear cover 225 having various shapes. In an embodiment, the cover window 215 may be integrally formed with the first housing 210, and the rear cover 225 may be integrally formed with the second housing 220.

According to an embodiment, the cover window 215, the rear cover 225, the first housing 210, and the second housing 220 may form a space in which various components (e.g., a printed circuit board or a battery) of the electronic device 101 may be disposed. According to an embodiment, one or more components may be disposed on or visually exposed through the rear surface of the electronic device 101. For example, at least a portion of a display panel (e.g., the display panel 218 of FIG. 4) may be visually exposed through a first rear area 216 of the cover window 215. For example, one or more components or sensors may be visually exposed through a second rear area 226 of the rear cover 225. In an embodiment, the sensor may include a proximity sensor and/or a rear camera.

According to an embodiment, the electronic device 101 may include a sub display. The sub display may include the cover window 215 and a display panel 218. The cover window 215 may include a transparent material (e.g., glass), but the disclosure is not limited thereto.

According to an embodiment, a front camera disposed on a front surface (e.g., a second front surface) of the electronic device 101 or a rear camera exposed through the second rear area 226 of the rear cover 225 may include one or more lenses, an image sensor, and/or an image signal processor. A flash may include, e.g., a light emitting diode or a xenon lamp. In an embodiment, two or more lenses (infrared cameras, wide-angle and telephoto lenses) and image sensors may be disposed on one surface of the electronic device 101.

According to an embodiment, when a state of the electronic device 101 and/or a housing 201 is a folded state (e.g., FIG. 3), the cover window 215 may face opposite to the rear cover 225. When the state of the electronic device 101 and/or the housing 201 is an unfolded state (e.g., FIG. 2), the cover window 215 may face substantially the same direction as the rear cover 225.

Referring to FIG. 3, the hinge cover (e.g., the hinge cover 232 of FIG. 4) included in the hinge assembly 230 may be disposed between the first housing 210 and the second housing 220 to hide the internal components (e.g., the hinge structure 231 of FIG. 4). According to an embodiment, the hinge assembly 230 may be hidden by a portion of the first housing 210 and second housing 220 or be exposed to the outside depending on the state (the unfolded state, intermediate state, or folded state) of the electronic device 101.

According to an embodiment, as shown in FIG. 2, in the unfolded state (e.g., a fully unfolded state) of the electronic device 101, the hinge assembly 230 may be hidden not to be exposed by the first housing 210 and the second housing 220. According to an embodiment, as shown in FIG. 3, in the folded state (e.g., a fully folded state) of the electronic device 101, the hinge assembly 230 may be exposed to the outside between the first housing 210 and the second housing 220. As an embodiment, in the intermediate state in which the first housing 210 and the second housing 220 are folded with a certain angle, the hinge assembly 230 may be partially exposed to the outside between the first housing 210 and the second housing 220. However, in this case, the exposed area may be smaller than that in the completely folded state. In an embodiment, the hinge assembly 230 may include a curved surface.

In an embodiment, the flexible display 250 may be disposed in a space formed by the foldable housing 201. For example, the flexible display 250 may be seated in a recess formed by the foldable housing 201 and may be seen from the outside through the front surface (e.g., the first front surface and/or the second front surface) of the electronic device 101. According to an embodiment, the flexible display 250 may constitute most of the front surface (e.g., the first front surface and/or the second front surface) of the electronic device 101. Accordingly, the front surface (e.g., the first front surface and/or the second front surface) of the electronic device 101 may include the flexible display 250 and a partial area of the first housing 210 and a partial area of the second housing 220 adjacent to the flexible display 250. Further, the rear surface (e.g., the first rear surface and/or the second rear surface) of the electronic device 101 may include the cover window 215, a partial area of the first housing 210 adjacent to the cover window 215, the rear cover 225, and a partial area of the second housing 220 adjacent to the rear cover 225.

According to an embodiment, a flexible display 250 may refer to a display in which at least a partial area may be deformed into a flat surface or a curved surface. According to an embodiment, the flexible display 250 may include a folding area 253, a first display area 251 disposed on one side of the folding area 253 (e.g., the left side of the folding area 253 of FIG. 2), and a second display area 252 disposed on the opposite side of the folding area 253 (e.g., the right side of the folding area 253 of FIG. 2).

According to an embodiment, the first display area 251 may be disposed on the first housing 210, and the second display area 252 may be disposed on the second housing 220. According to an embodiment, the folding area 253 may connect the first display area 251 and the second display area 252, and may be disposed on the hinge assembly 230.

The segmentation of the flexible display 250 as shown in FIG. 2 is merely an example, and the display 250 may be divided into a plurality of (e.g., four or more, or two) areas depending on the structure or function of the display 250. For example, in the embodiment illustrated in FIG. 2, the area of the flexible display 250 may be divided by the folding area 253 extending parallel to the folding axis A, but the area of the flexible display 250 may be divided by another folding axis (e.g., a folding axis parallel to the width direction of the electronic device).

According to an embodiment, the flexible display 250 may be coupled or disposed adjacent to a touch panel provided with a touch sensing circuit and a pressure sensor capable of measuring the intensity (pressure) of the touch. For example, as an example of the touch panel, the flexible display 250 may be coupled to or disposed adjacent to an electromagnetic induction panel for detecting an electromagnetic resonance (EMR)-type stylus pen (e.g., the input module 150 of FIG. 1).

According to an embodiment, the first display area 251 and the second display area 252 may be overall symmetrical in shape with respect to the folding area 253.

Described below are the operation of the first housing 210 and the second housing 220 and each area of the flexible display 250 depending on the state (e.g., the folded state, unfolded state, or intermediate state) of the electronic device 101.

According to an embodiment, when the electronic device 101 is in the unfolded state (e.g., FIG. 2), the first housing 210 and the second housing 220 may be disposed to face in the same direction while forming an angle of 180 degrees. The surface of the first display area 251 and the surface of the second display area 252 of the flexible display 250 may be angled at 180 degrees therebetween while facing the same direction (e.g., forward of the front surface of the electronic device). In this case, the folding area 253 may form the same plane with the first display area 251 and the second display area 252.

According to an embodiment, when the electronic device 101 is in the folded state (e.g., FIG. 3), the first housing 210 and the second housing 220 may be disposed to face each other. The surface of the first display area 251 and the surface of the second display area 252 of the flexible display 250 may face each other while forming a narrow angle (e.g., between 0 degrees and 10 degrees). At least a portion of the folding area 253 may be formed as a curve having a predetermined curvature.

According to an embodiment, when the electronic device 101 is in the intermediate state, the first housing 210 and the second housing 220 may be disposed at a certain angle. The surface of the first display area 251 and the surface of the second display area 252 of the flexible display 250 may form an angle larger than that in the folded state and smaller than that in the unfolded state. The folding area 253 may at least partially have a curved surface with a predetermined curvature and, in this case, the curvature may be smaller than that when it is in the folded state.

According to an embodiment, the first housing 210 may include first housing holes 2101 and 2102. According to an embodiment, the first housing holes 2101 and 2102 may include a1-1st housing hole 2101 formed in the 1-2nd side surface 211b of the first housing 210 and a 1-2nd housing hole 2102 formed in the 1-3rd side surface 211c of the first housing 210.

According to an embodiment, the 1-2nd side surface 211b of the first housing 210 may include a 1-1st segmenter 212a formed of a non-metallic material. According to an embodiment, a pair of 1-1st segmenters 212a spaced apart from each other may be provided. According to an embodiment, the 1-1st housing hole 2101 may be formed between the pair of 1-1st segmenters 212a.

According to an embodiment, the 1-3rd side surface 211c of the first housing 210 may include a 1-2nd segmenter 212b formed of a non-metallic material. According to an embodiment, a pair of 1-2nd segmenters 212b spaced apart from each other may be provided. According to an embodiment, the 1-2nd housing hole 2102 may be formed between the pair of 1-2nd segmenters 212b.

According to an embodiment, the number of at least one 1-1st housing hole 2101 may be equal to the number of at least one 1-2nd housing hole 2102.

According to an embodiment, the 1-2nd side surface 211b and the 1-3rd side surface 211c may be disposed in parallel. According to an embodiment, the plurality of 1-1st housing holes 2101 and the plurality of 1-2nd housing holes 2102 may be disposed to overlap each other with respect to the length direction (e.g., Y-axis direction of FIG. 4) of the electronic device 101. For example, the plurality of 1-1st housing holes 2101 may be disposed to correspond to the plurality of 1-2nd housing holes 2102, respectively, in the length direction (e.g., the Y axis direction of FIG. 4) of the electronic device 101.

According to an embodiment, the plurality of 1-1st housing holes 2101 may be disposed on a straight line with respect to the width direction (e.g., the X axis direction of FIG. 4) of the electronic device 101 (or first housing 210). According to an embodiment, the plurality of 1-2nd housing holes 2102 may be disposed on a straight line with respect to the width direction (e.g., the X axis direction of FIG. 4) of the electronic device 101 (or first housing 210).

According to an embodiment, the second housing 220 may include second housing holes 2201 and 2204. According to an embodiment, the second housing holes 2201 and 2204 may include a 2-1st housing hole 2201 formed in the 2-2nd side surface 221b of the second housing 220 and a 2-2nd housing hole 2204 formed in the 2-3rd side surface 221c of the second housing 220.

According to an embodiment, the 2-2nd side surface 221b of the second housing 220 may include a 2-1st segmenter 222a formed of a non-metallic material. According to an embodiment, a pair of 2-1st segmenters 222a spaced apart from each other may be provided. According to an embodiment, a portion of the 2-1st housing hole 2201 may be formed between the pair of 2-1st segmenters 222a, and the remaining portion of the 2-1st housing hole 2201 may be formed between the folding axis A (or the hinge assembly 230) and any one of the 2-1st segmenters 222a.

According to an embodiment, the 2-3rd side surface 221c of the second housing 220 may include a 2-2nd segmenter 222b formed of a non-metallic material. According to an embodiment, a pair of 2-2nd segmenters 222b spaced apart from each other may be provided. According to an embodiment, the 2-1st housing hole 2201 may be formed between the pair of 2-2nd segmenters 222b.

According to an embodiment, the 2-3rd side surface 221c of the second housing 220 may include a connection terminal 289 (e.g., the connection terminal 178 of FIG. 1).

In the following description of the drawings, illustrated is a spatial coordinate system defined by an X-axis, a Y-axis and a Z-axis orthogonal to each other. Here, the X-axis may indicate the width direction of the components of the electronic device or the electronic device, the Y-axis may indicate the length direction of the components of the electronic device or the electronic device, and the Z-axis may indicate the height (or thickness) direction of the components of the electronic device or the electronic device. In describing an embodiment of the disclosure, the 'first direction and the second direction' may mean directions parallel to the Z-axis.

FIG. 4 is an exploded perspective view illustrating an electronic device according to an embodiment of the disclosure.

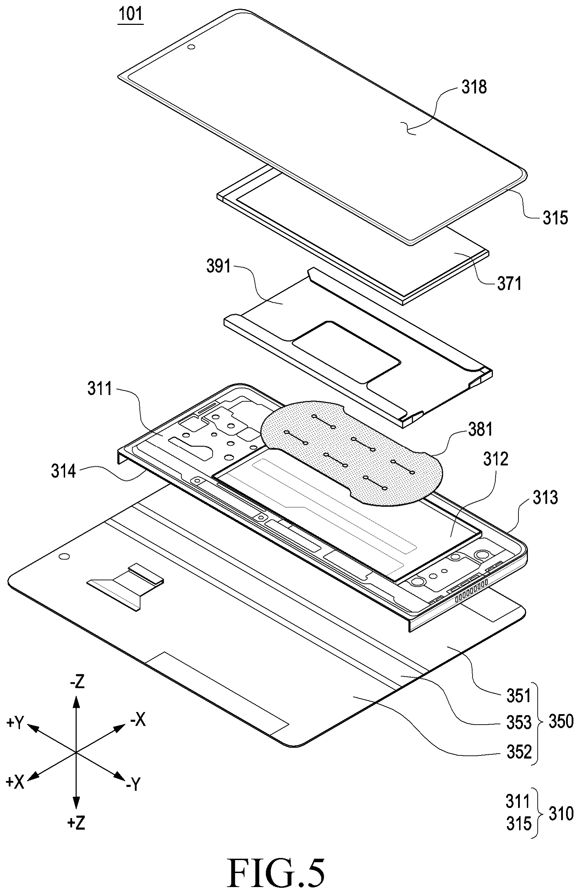

The embodiment of FIG. 4 may be combinable with the embodiments of FIGS. 1 to 3, or the embodiments of FIGS. 5 to 15.

Referring to FIG. 4, an electronic device 101 (e.g., the electronic device 101 of FIGS. 1 to 3) may include a foldable housing 201, a first housing 210, a second housing 220, a hinge assembly 230, a flexible display 250, a first printed circuit board 241, a second printed circuit board 242, a waterproofing member 260, a first battery 271, or a second battery 272.

The configuration of the foldable housing 201, the first housing 210, the second housing 220, the hinge assembly 230, or the flexible display 250 of FIG. 4 may be identical in whole or part to the configuration of the foldable housing 201, the first housing 210, the second housing 220, the hinge assembly 230, or the flexible display 250 of FIGS. 2 and 3.

According to an embodiment, the electronic device 101 may include various electronic components (or electrical components) disposed inside or outside the first housing 210 and the second housing 220. The various electronic components may include, e.g., a processor (e.g., the processor 120 of FIG. 1), memory (e.g., the memory 130 of FIG. 1), an input module (e.g., the input module 150 of FIG. 1), a sound output module (e.g., the sound output module 155 of FIG. 1), a flexible display 250 (e.g., the display module 160 of FIG. 1), an audio module (e.g., the audio module 170 of FIG. 1), a sensor (e.g., the sensor module 176 of FIG. 1), an interface (e.g., the interface 177 of FIG. 1), a connecting terminal (e.g., the connecting terminal 178 of FIG. 1 or the connecting terminal 289 of FIG. 2), a haptic module (e.g., the haptic module 179 of FIG. 1), a camera module (e.g., the camera module 180 of FIG. 1), a power management module (e.g., the power management module 188 of FIG. 1), batteries 271 and 272 (e.g., the battery 189 of FIG. 1), a communication module (e.g., the communication module 190 of FIG. 1), a subscriber identification module (e.g., the subscriber identification module 196 of FIG. 1), or an antenna module (e.g., the antenna module 197 of FIG. 1). The electronic components may be appropriately separated and disposed in the inner or outer space of the first housing 210 and the second housing 220. At least one (e.g., the connecting terminal 178) of these components may be omitted from the electronic device 101, or one or more other components may be added thereto. Further, some of these components may be integrated into one component.

According to an embodiment, the electronic device 101 is a foldable electronic device, and may include a plurality of batteries to supply and store power required for driving to electronic components. For example, the electronic device 101 may include a first battery 271 and a second battery 272 disposed in the first housing 210 and the second housing 220, respectively.

According to an embodiment, the first battery 271 may be disposed inside the first housing 210. The second battery 272 may be disposed inside the second housing 220. According to an embodiment, a first battery 271 may be disposed inside the first housing 210 including the cover window 215. The first battery 271 may be located between a first plate 213 and the cover window 215. A second battery 272 may be disposed inside the second housing 220 including the rear cover 225. The second battery 272 may be located between a second plate 223 and the rear cover 225.

According to an embodiment, the first housing 210 may include a 1-1st side surface 211a (e.g., the 1-1st side surface 211a of FIGS. 2 to 3), a 1-2nd side surface 211b (e.g., the 1-2nd side surface 211b of FIGS. 2 to 3), a 1-3rd side surface 211c (e.g., the 1-3rd side surface 211c of FIGS. 2 to 3), and/or a first plate 213.

According to an embodiment, the second housing 220 may include a 2-1st side surface 221a (e.g., the 2-1st side surface 221a of FIGS. 2 to 3), a 2-2nd side surface 221b (e.g., the 2-2nd side surface 221b of FIGS. 2 to 3), a 2-3rd side surface 221c (e.g., the 2-3rd side surface 221c of FIGS. 2 to 3), and/or a second plate 223.

According to an embodiment, the electronic device 101 is a foldable electronic device, and may include a first plate 213 and/or a second plate 223 for disposing components in the first housing 210 and the second housing 220. In an embodiment, the first plate 213 may be interpreted as a component of the first housing 210, and the second plate 223 may be interpreted as a component of the second housing 220. In an embodiment, the first plate 213 may be interpreted as a separate component from the first housing 210, and the second plate 223 may be interpreted as a separate component from the second housing 220. Various electronic components and/or printed circuit boards 241 and 242 may be disposed on the first plate 213 and/or the second plate 223. According to an embodiment, the first plate 213 and the first printed circuit board 241 may be disposed in the first housing 210. The second plate 223 and the second printed circuit board 242 may be disposed in the second housing 220. The first plate 213 may include a first surface facing a first direction (e.g., the +Z direction of FIG. 4), and the second plate 223 may include a second surface facing a second direction (e.g., the +Z direction of FIG. 4). The first plate 213 and the second plate 223 may be folded or unfolded with respect to each other by the hinge structure 231 formed corresponding to the folding area 253 of the flexible display 250 and be formed to face each other in the folded state and, in the unfolded state, be formed so that the first surface and the second surface face in the same direction.

According to an embodiment, the first printed circuit board 241 may be disposed in the third waterproof area 263-1 formed by the third waterproof member 263.

According to an embodiment, the flexible display 250 may be disposed in the first housing 210 and the second housing 220. According to an embodiment, the first display area 251 may be disposed on the first housing 210 (or the first plate 213), and the second display area 252 may be disposed on the second housing 220 (or the second plate 223). According to an embodiment, the folding area 253 may connect the first display area 251 and the second display area 252 and may be disposed on the hinge structure 231.

According to an embodiment, the first printed circuit board 241 may be disposed under the first plate 213 (in the -Z-axis direction), and the second printed circuit board 242 may be disposed under the second plate 223 (in the -Z-axis direction).

According to an embodiment, signals of the processor for implementing various functions and operations of the electronic device 101 may be transferred through various conductive lines and/or connecting member (connector) formed on the printed circuit boards 241 and 242.

According to an embodiment, a foldable housing 201 may include the first housing 210, the second housing 220, the cover window 215, the rear cover 225, and a hinge assembly 230.

According to an embodiment, the cover window 215 may be defined and/or interpreted as a partial configuration of the first housing 210. For example, the first housing 210 may include the cover window 215. The rear cover 225 may be defined and/or interpreted as a partial configuration of the second housing 220. For example, the second housing 220 may include the rear cover 225.

According to an embodiment, the flexible display 250 may include a display panel. In an embodiment, the first plate 213 and the second plate 223 may be disposed between the display panel and a first printed circuit board 241 and a second printed circuit board 242. For example, at least a portion of the first plate 213 may be disposed between the display panel and the first printed circuit board 241. At least a portion of the second plate 223 may be disposed between the display panel and the second printed circuit board 242. The hinge assembly 230 may be disposed between the first plate 213 and the second plate 223.

According to an embodiment, the electronic device 101 may include a flexible printed circuit board 243 (FPCB) that electrically connects the first printed circuit board 241 and the second printed circuit board 242. At least a portion of the flexible printed circuit board 243 may be disposed on the hinge assembly 230 (or the hinge structure 231).

According to an embodiment, the electronic device 101 may further include a display panel 218 (e.g., the display module 160 of FIG. 1) disposed between the first housing 210 (e.g., the first plate 213) and the cover window 215. According to an embodiment, the display panel 218 may be coupled to the cover window 215. According to an embodiment, the display panel 218 may also be coupled to the first printed circuit board 241. For example, the display panel 218 may be visually exposed to an outside of the electronic device 101 through the first rear area (e.g., the first rear area 216 of FIG. 2) of the cover window 215.

According to an embodiment, the hinge assembly 230 may include a hinge structure 231 and a hinge cover 232. According to an embodiment, the first housing 210 and the second housing 220 may be connected to each other through the hinge structure 231, and may rotate relative to each other. According to an embodiment, the hinge cover 232 may cover the hinge structure 231.

According to an embodiment, the hinge assembly 230 (or the hinge structure 232) may connect the first housing 210 and the second housing 220 such that the first housing 210 and the second housing 220 are relatively rotatable about each other.

According to an embodiment, the electronic device 101 may include a first printed circuit board 241 and a second printed circuit board 242. The first printed circuit board 241 and the second printed circuit board 242 may be disposed inside a space formed by the first plate 213, the second plate 223, the first housing 210, the second housing 220, the cover window 215, and the rear cover 225. Components for implementing various functions of the electronic device 101 may be disposed on the first printed circuit board 241 and the second printed circuit board 242. According to an embodiment, the first printed circuit board 241 and the second printed circuit board 242 may include any one of a printed circuit board (PCB), a flexible printed circuit board (FPCB), or a rigid-flexible PCB (RF-PCB). The first printed circuit board 241 may be defined and/or referred to as a first circuit board. The first printed circuit board 241 may be disposed inside the first housing 210 including the cover window 215. A second printed circuit board 243 may be disposed inside the second housing 220 including the rear cover 225.

According to an embodiment, the first housing 210 and the second housing 220 may be assembled to be coupled to two opposite sides of the hinge assembly 230 in a state in which the first plate 213 and the second plate 223 and the flexible display 250 are coupled. For example, the first housing 210 may be coupled by sliding on one side of the hinge assembly 230, and the second housing 220 may be coupled by sliding on the other side of the hinge assembly 230.

According to an embodiment, the waterproof member 260 may be disposed inside the electronic device 101. According to an embodiment, the waterproof member 260 may include a first waterproof member 261, a second waterproof member 262, a third waterproof member 263, and/or a fourth waterproof member 264.

According to an embodiment, the first waterproof member 261 may be disposed between the first housing 210 and the flexible display 250. According to an embodiment, the first waterproof member 261 may be disposed between the first plate 213 and the first display area 251. According to an embodiment, the first waterproof member 261 may be formed of a waterproof tape. According to an embodiment, the first waterproof member 261 may be bonded to the first housing 210 and/or the first plate 213, and may be bonded to the flexible display 250 (e.g., the first display area 251). According to an embodiment, the first waterproof member 261 may have a closed loop shape. For example, the first waterproof member 261 may include at least one closed loop area. According to an embodiment, the first waterproof member 261 may include a waterproof tape, and may restrict liquid inflow from the outside of the closed loop area of the first waterproof member 261 to the inside of the closed loop area.

According to an embodiment, the first waterproof member 261 may include at least one first waterproof area 261-1. According to an embodiment, the at least one first waterproof area 261-1 may be defined and interpreted as an inside of the closed loop area of the first waterproof member 261.

According to an embodiment, the second waterproof member 262 may be disposed between the second housing 220 and the flexible display 250. According to an embodiment, the second waterproof member 262 may be disposed between the second plate 223 and the second display area 252. According to an embodiment, the second waterproof member 262 may be formed of a waterproof tape. According to an embodiment, the second waterproof member 262 may be bonded to the second housing 220 and/or the second plate 223, and may be bonded to the flexible display 250 (e.g., the second display area 252). According to an embodiment, the second waterproof member 262 may have a closed loop shape. For example, the second waterproof member 262 may include at least one closed loop area. According to an embodiment, the second waterproof member 262 may include a waterproof tape, and may restrict liquid inflow from the outside of the closed loop area of the second waterproof member 262 to the inside of the closed loop area.

According to an embodiment, the second waterproof member 262 may include at least one second waterproof area 262-1. According to an embodiment, the at least one second waterproof area 262-1 may be defined and interpreted as the inside of a closed loop area of the second waterproof member 262.

According to an embodiment, a third waterproofing member 263 may be disposed between the first housing 210 and the cover window 215. According to an embodiment, the third waterproofing member 263 may be disposed between the first plate 213 and the display panel 218. According to an embodiment, the third waterproof member 263 may be formed of a waterproof tape. According to an embodiment, the third waterproofing member 263 may be adhered to the first housing 210 and/or the first plate 213 and may be adhered to the cover window 215 and/or the display panel 218. According to an embodiment, the third waterproof member 263 may have a closed loop shape. For example, the third waterproof member 263 may include at least one closed loop area. According to an embodiment, the third waterproof member 263 may include a waterproof tape, and may restrict liquid inflow from the outside of the closed loop area of the third waterproof member 263 to the inside of the closed loop area.

According to an embodiment, the third waterproof member 263 may include at least one third waterproof area 263-1. According to an embodiment, the at least one third waterproof area 263-1 may be defined and interpreted as an inside of the closed loop area of the third waterproof member 263.

According to an embodiment, a fourth waterproofing member 264 may be disposed between the second housing 220 and the rear cover 225. According to an embodiment, the fourth waterproofing member 264 may be disposed between the second plate 223 and the rear cover 225. According to an embodiment, the fourth waterproof member 264 may be formed of a waterproof tape. According to an embodiment, the fourth waterproofing member 264 may be adhered to the second housing 220 and/or the second plate 223 and may be adhered to the rear cover 225. According to an embodiment, the fourth waterproof member 264 may have a closed loop shape. For example, the fourth waterproof member 264 may include at least one closed loop area. According to an embodiment, the fourth waterproof member 264 may include a waterproof tape, and may restrict liquid inflow from the outside of the closed loop area of the fourth waterproof member 264 to the inside of the closed loop area.

According to an embodiment, the fourth waterproof member 264 may include at least one fourth waterproof area 264-1. According to an embodiment, the at least one fourth waterproof area 264-1 may be defined and interpreted as an inside of the closed loop area of the fourth waterproof member 264.

According to an embodiment, the first waterproof member 261, the second waterproof member 262, the third waterproof member 263, and the fourth waterproof member 264 may be disposed not to contact the hinge assembly 230.

According to an embodiment, as the waterproof member 260 is disposed inside the electronic device 101, the electronic device 101 may restrict the inflow of liquid from the outside of the electronic device 101 into the electronic device 101.

FIG. 5 is an exploded perspective view illustrating an electronic device according to an embodiment of the disclosure.

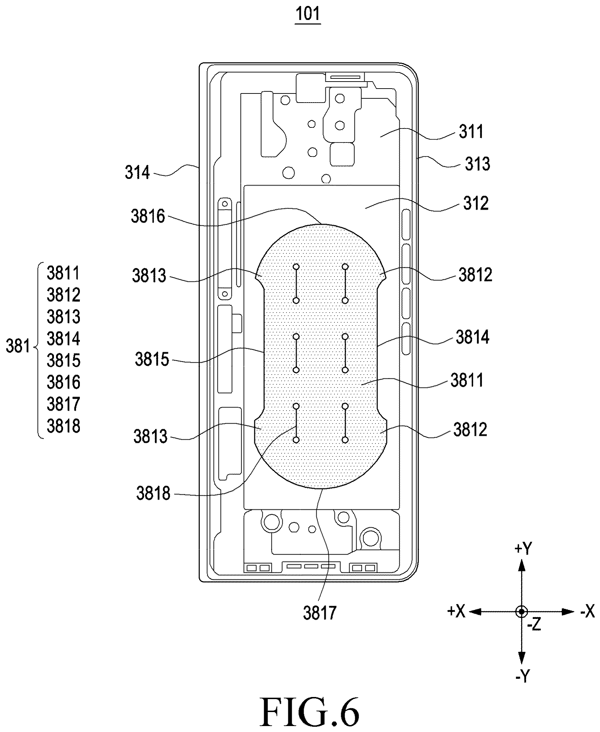

FIG. 6 is a plan view illustrating an electronic device according to an embodiment of the disclosure.

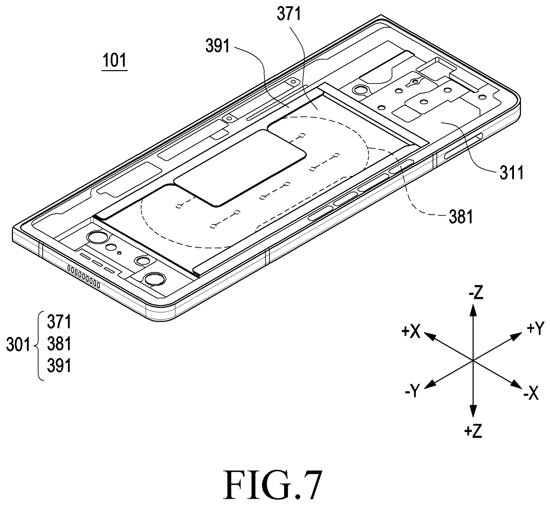

FIG. 7 is an assembled perspective view illustrating an electronic device according to an embodiment of the disclosure.

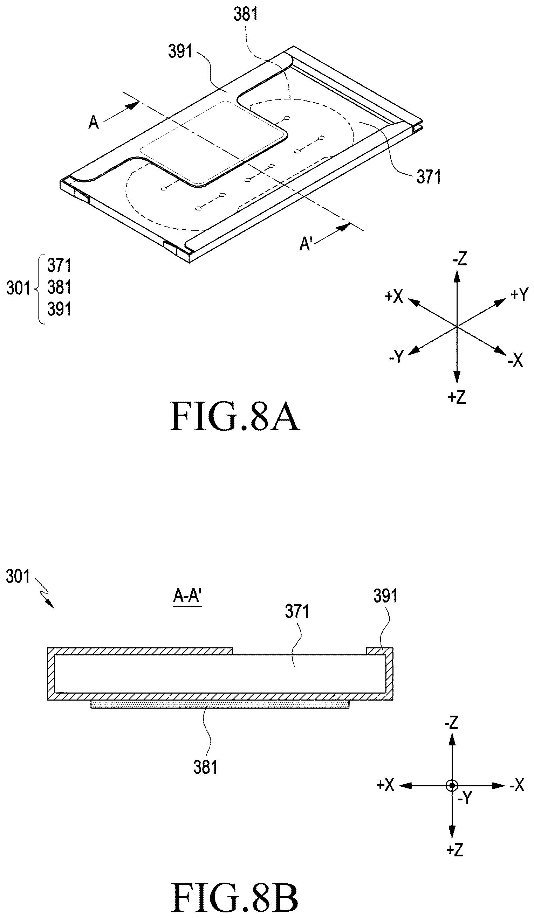

FIG. 8A is a perspective view illustrating a first battery according to an embodiment of the disclosure.

FIG. 8B is a cross-sectional view taken along line A-A' of FIG. 8A according to an embodiment of the disclosure.

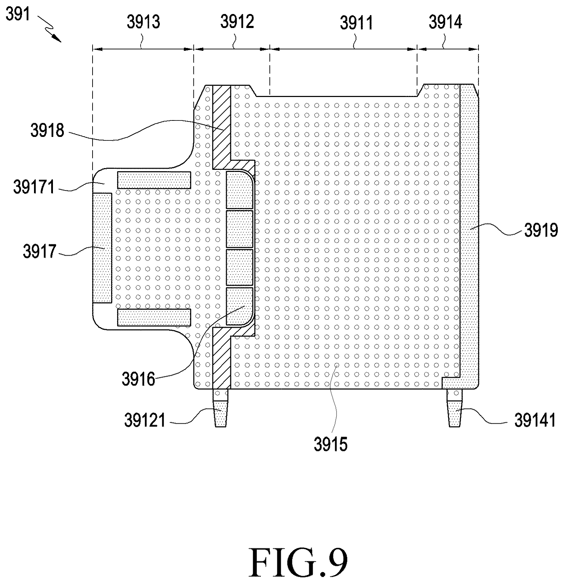

FIG. 9 is a plan view illustrating a first film member according to an embodiment of the disclosure.

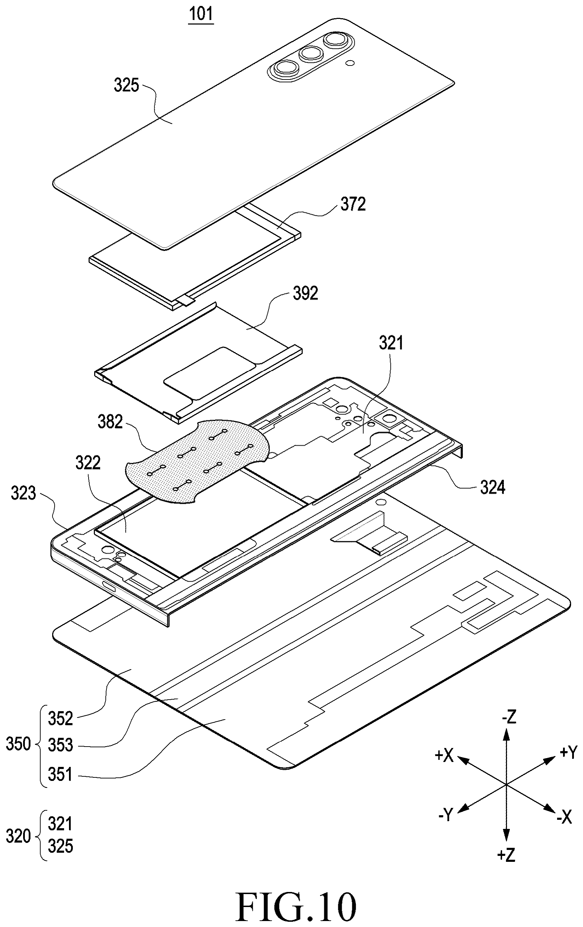

The embodiments of FIGS. 5 to 9 may be combinable with the embodiments of FIGS. 1 to 4 or the embodiments of FIGS. 10 to 15.

Referring to FIGS. 5 to 8B, an electronic device 101 (e.g., the electronic device 101 of FIGS. 2 to 4) may include a first housing 310, a flexible display 350, a first battery 371, a first adhesive member 381, or a first film member 391.

Although only the first housing 310, the first battery 371, the first adhesive member 381, or the first film member 391 is illustrated in FIGS. 5 to 7, the embodiments of FIGS. 5 to 9 may be implemented or used together with the configurations of a second housing 320, a second battery 372, a second adhesive member 382, or a second film member 392 of FIGS. 10 to 14. Depending on embodiments, some of the above-described components may be omitted.

The configuration of the first housing 310 or the flexible display 350 of FIGS. 5 to 8B may be identical in whole or portion to the configuration of the first housing 210 or the flexible display 250 of FIG. 4.

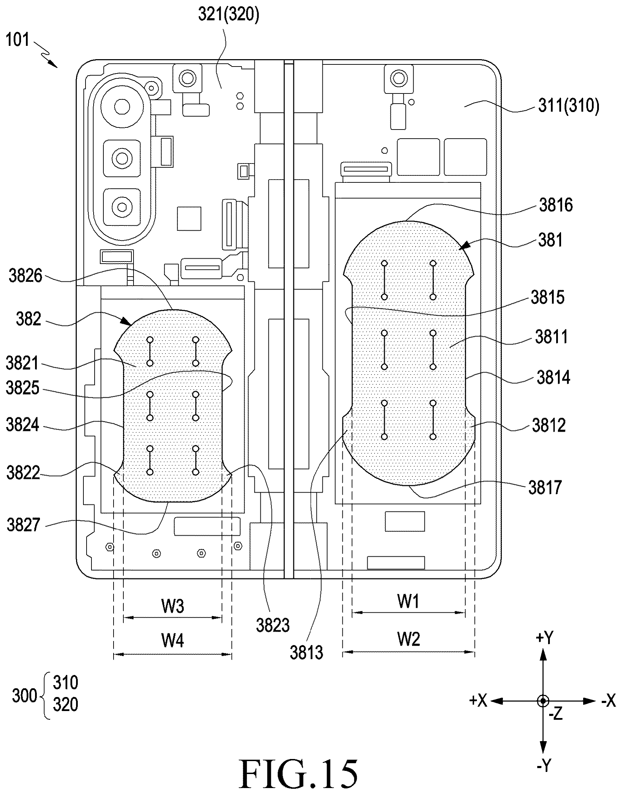

According to an embodiment, the flexible display 350 may be disposed on a foldable housing (e.g., the foldable housing 201 of FIG. 4 or the foldable housing 300 of FIG. 15).

According to an embodiment, the flexible display 350 may include a first display area 351 (e.g., the first display area 251 of FIG. 4), a second display area 352 (e.g., the second display area 252 of FIG. 4), or a folding area 353 (e.g., the folding area 253 of FIG. 4).

According to an embodiment, the first housing 310 may include a first support member 311 (e.g., the first plate 213 of FIG. 4). The first support member 311 may be defined and/or referred to as a first bracket, a first front member, or a first plate. The first housing 310 may be defined and/or referred to as a first housing portion.

According to an embodiment, the first support member 311 may provide a space in which various components of the electronic device 101 may be disposed. A portion (e.g., the first display area 351) of a foldable display 350 may be disposed or received on one surface (e.g., a surface facing the +Z direction in FIG. 5) of the first support member 311. The first battery 371 or a first circuit board (e.g., the first printed circuit board 241 of FIG. 4) may be disposed or received on another surface (e.g., a surface facing the -Z direction in FIG. 5) of the first support member 311.

According to an embodiment, the first housing 310 may include a cover window 315 (e.g., the cover window 215 of FIG. 4). The cover window 315 may cover the other surface (e.g., the surface facing the -Z direction in FIG. 5) of the first support member 311.

According to an embodiment, the electronic device 101 may include a display panel 318 (e.g., the display panel 218 of FIG. 4) visually exposed through the cover window 315.

According to an embodiment, the first support member 311 may include a first recess 312. The first recess 312 may be recessedly formed in the other surface (e.g., the surface facing the -Z direction in FIG. 5) of the first support member 311. The first recess 312 may be defined and/or referred to as a first groove, a first concave portion, or a first seating portion. The first battery 371 or a first battery assembly (e.g., the first battery assembly 301 of FIG. 8B) may be disposed or received in the first recess 312.

According to an embodiment, the first recess 312 may provide a space for receiving the first battery 371. A depth (e.g., a depth in the Z-axis direction in FIG. 5) of the first recess 312 may be greater than a thickness (e.g., a thickness in the Z-axis direction in FIG. 5) of the first battery 371. The depth of the first recess 312 may be substantially the same as the thickness of the first battery 371. The depth of the first recess 312 may be less than the thickness of the first battery 371. A size (e.g., a size or area on a plane combined in the X-axis direction and the Y-axis direction in FIG. 5) of the first recess 312 may be greater than a size (e.g., a size or area on a plane combined in the X-axis direction and the Y-axis direction in FIG. 5) of the first battery 371. The size of the first recess 312 may be substantially the same as the size of the first battery 371.

According to an embodiment, a shape of the first recess 312 may correspond to a shape of the first battery 371. For example, when the first battery 371 is a bar type, the first recess 312 may have a bar shape. The shape of the first recess 312 is not limited thereto and may have various shapes capable of receiving the first battery 371.

According to an embodiment, the first support member 311 may include a first side surface 313 (e.g., the 1-1st side surface 211a of FIG. 4). The first side surface 313 may form at least a portion of a side surface of the first support member 311. The first side surface 313 may face opposite to a first edge portion 314. The first side surface 313 may be defined and/or referred to as a first side wall. The first support member 311 may be defined and/or interpreted as being connected to the first side surface 313.

According to an embodiment, the first support member 311 may include the first edge portion 314. The first edge portion 314 may be connected to a hinge assembly (e.g., the hinge assembly 230 of FIG. 4). The first edge portion 314 may be connected to a hinge structure (e.g., the hinge structure 231 of FIG. 4).

According to an embodiment, the first battery 371 may supply power to at least one component of the electronic device 101. The first battery 371 may supply power to at least one component disposed in the first housing 310. Depending on embodiments, the first battery 371 may supply power to at least one component of a second housing (e.g., the second housing 320 of FIG. 10). The first battery 371 may be disposed inside the first housing 310.

According to an embodiment, the first battery 371 may be disposed on the first recess 312 of the first support member 311. For example, the first battery 371 may be at least partially received in the first recess 312.

According to an embodiment, the first battery 371 may be located between the first support member 311 and the cover window 315. For example, one surface (e.g., a surface facing the +Z direction in FIG. 5) of the first battery 371 may face the first support member 311. For example, another surface (e.g., a surface facing the -Z direction in FIG. 5) of the first battery 371 may face the cover window 315.

According to an embodiment, the first adhesive member 381 may be disposed in the first recess 312. The first adhesive member 381 may be configured to adhere the first battery 371 or a first battery assembly 301 (e.g., the first battery assembly 301 of FIG. 8B) to the first support member 311. For example, the first adhesive member 381 may adhere the first battery 371 or the first battery assembly 301 to at least a portion (e.g., a lower surface of the first recess 312) of the first recess 312. According to an embodiment, the first battery 371 may be coupled to the first recess 312 through the first adhesive member 381.

According to an embodiment, the first adhesive member 381 may include a double-sided tape. For example, one surface (e.g., a surface facing the +Z direction in FIG. 5) of the first adhesive member 381 may be adhered to the first recess 312, and another surface (e.g., a surface facing the -Z direction in FIG. 5) of the first adhesive member 381 may be adhered to the first film member 391. The first adhesive member 381 may be defined and/or interpreted as being adhered to the first battery 371. The first adhesive member 381 may be referred to as a first battery tape or a first battery front tape.

According to an embodiment, an area (e.g., an area on a plane combined with the X-axis and the Y-axis in FIG. 5) of the first adhesive member 381 may be smaller than an area (e.g., an area on a plane combined with the X-axis and the Y-axis in FIG. 5) of the first battery 371. The area of the first adhesive member 381 may be at least half of the area of the first battery 371.

According to an embodiment, the first film member 391 may surround at least a portion of the first battery 371. The first film member 391 may surround at least a portion of at least three surfaces of the first battery 371. For example, the first film member 391 may surround at least a portion of an upper surface or a front surface (e.g., a surface facing the +Z direction in FIG. 5) of the first battery 371, at least a portion of an inner surface (e.g., a surface facing the +X direction in FIG. 5) of the first battery 371, or at least a portion of a lower surface or a rear surface (e.g., a surface facing the -Z direction in FIG. 5) of the first battery 371.

According to an embodiment, the first film member 391 may facilitate separation of the first battery 371 so that repair or replacement of the first battery 371 disposed on the first recess 312 is facilitated.

According to an embodiment (e.g., FIG. 6), the first adhesive member 381 may include a first body portion 3811. The first body portion 3811 may form an overall body of the first adhesive member 381.

According to an embodiment, the first adhesive member 381 may include a first outer portion 3814. The first outer portion 3814 may be a portion of the first body portion 3811 facing the first side surface 313. The first outer portion 3814 may be disposed substantially parallel to the first side surface 313. The first outer portion 3814 may be defined and/or referred to as an outer side surface of the first adhesive member 381 or the first body portion 3811.

According to an embodiment, the first adhesive member 381 may include a first inner portion 3815. The first inner portion 3815 may face opposite to the first outer portion 3824. The first inner portion 3815 may be disposed substantially parallel to the first outer portion 3824. The first inner portion 3815 may be disposed substantially parallel to the first side surface 313. The first inner portion 3815 may be defined and/or referred to as an inner side surface of the first adhesive member 381 or the first body portion 3811.

According to an embodiment, the first adhesive member 381 may include a first upper portion 3816. The first upper portion 3816 may face opposite to a first lower portion 3817. The first upper portion 3816 may face an upper side surface (e.g., the 1-2nd side surface 211b of FIG. 4) of the first housing 310. The first upper portion 3816 may be formed to be at least partially curved. For example, the first upper portion 3816 may include a curved surface. The first upper portion 3816 may be defined as a partial configuration of the at least one first curvature portion 3816, 3817 of the first adhesive member 381. The first upper portion 3816 may be defined and/or referred to as a first curvature portion.

According to an embodiment, the first upper portion 3816 may connect the first outer portion 3814 and the first inner portion 3815. The first upper portion 3816 may be defined and/or interpreted as connecting the first protruding portion 3812 and the second protruding portion 3813.

According to an embodiment, the first adhesive member 381 may include the first lower portion 3817. The first lower portion 3817 may face opposite to the first upper portion 3816. The second lower portion 3826 may face a lower side surface (e.g., the 1-3rd side surface 211c of FIG. 4) of the first housing 310. The first lower portion 3817 may be formed to be at least partially curved. For example, the first lower portion 3817 may include a curved surface. The first lower portion 3817 may be defined as a partial configuration of the at least one first curvature portion 3816, 3817 of the first adhesive member 381. The first lower portion 3817 may be defined and/or referred to as a second curvature portion.

According to an embodiment, the first adhesive member 381 may include at least one first curvature portion 3816, 3817. The at least one first curvature portion 3816, 3817 may connect the first outer portion 3814 and the first inner portion 3815.

According to an embodiment, the first lower portion 3817 may connect the first outer portion 3814 and the first inner portion 3815. The first lower portion 3817 may be defined and/or interpreted as connecting the first protruding portion 3812 and the second protruding portion 3813.

According to an embodiment, the first adhesive member 381 may include the first protruding portion 3812. The first protruding portion 3812 may be formed to protrude from at least a portion of the first outer portion 3814. For example, the first protruding portion 3812 may be defined as protruding or extending from the first outer portion 3814 toward the first side surface 313. The first protruding portion 3812 may be defined and/or referred to as a first extension.

According to an embodiment, the first protruding portion 3812 may be provided as at least one or more. According to the illustrated embodiment, the first protruding portion 3812 is provided as two, but is not limited thereto, and may be provided as one or three or more.

According to an embodiment, the first protruding portion 3812 (e.g., the first protruding portion 3812 located on the +Y direction side in FIG. 6) may connect the first upper portion 3816 and the first outer portion 3814. The first protruding portion 3812 (e.g., the first protruding portion 3812 located on the -Y direction side in FIG. 6) may connect the first lower portion 3817 and the first outer portion 3814.

According to an embodiment, a distance (e.g., a distance in the X-axis direction in FIG. 6) between the first protruding portion 3812 and the first side surface 313 may be smaller than a distance (e.g., a distance in the X-axis direction in FIG. 6) between the first outer portion 3814 and the first side surface 313.

According to an embodiment, the first adhesive member 381 may include the second protruding portion 3813. The second protruding portion 3813 may be formed to protrude from at least a portion of the first inner portion 3815. For example, the second protruding portion 3813 may be defined as protruding or extending from the first inner portion 3815 toward the first edge portion 314. The second protruding portion 3813 may protrude from the first inner portion 3815 toward a hinge structure (e.g., the hinge structure 231 of FIG. 4). The second protruding portion 3813 may face opposite to the first protruding portion 3812. The second protruding portion 3813 may be defined and/or referred to as a second extension.

According to an embodiment, the second protruding portion 3813 may be provided as at least one or more. According to the illustrated embodiment, the second protruding portion 3813 is provided as two, but is not limited thereto, and may be provided as one or three or more.

According to an embodiment, the second protruding portion 3813 (e.g., the second protruding portion 3813 located on the +Y direction side in FIG. 6) may connect the first upper portion 3816 and the first inner portion 3815. The second protruding portion 3813 (e.g., the second protruding portion 3813 located on the -Y direction side in FIG. 6) may connect the first lower portion 3817 and the first inner portion 3815.

According to an embodiment, a distance (e.g., a distance in the X-axis direction in FIG. 6) between the second protruding portion 3813 and the first edge portion 314 may be smaller than a distance (e.g., a distance in the X-axis direction in FIG. 6) between the first inner portion 3815 and the first edge portion 314.

According to an embodiment, the first adhesive member 381 may include a first penetrating structure 3818. The first penetrating structure 3818 may be formed to penetrate through at least a portion of the first body portion 3811. The first penetrating structure 3818 may include an opening. The first penetrating structure 3818 may include a slit. The first penetrating structure 3818 may be formed in at least a portion of the first adhesive member 381.

According to an embodiment, the first penetrating structure 3818 may form or provide a passage for discharging an air bubble formed or remaining between the first adhesive member 381 and the first recess 312 when the first adhesive member 381 is adhered to at least a portion (e.g., the lower surface of the first recess 312) of the first recess 312.

According to an embodiment, the first penetrating structure 3818 may form or provide a passage for discharging an air bubble formed (or remaining) between the first adhesive member 381 and the first film member 391 when the first adhesive member 381 is adhered to at least a portion of the first film member 391.

According to an embodiment, the first adhesive member 381 may be adhered to a portion of the first recess 312. The first adhesive member 381 may be adhered to a portion of the first support member 311.

According to an embodiment, a length or height (e.g., a length or height in the Y-axis direction in FIG. 6) of the first adhesive member 381 may vary along a direction from the first edge portion 314 toward the first side surface 313 or a direction from the first side surface 313 toward the first edge portion 314 (e.g., the X-axis direction in FIG. 6). For example, the length of the first adhesive member 381 may be longest at a central portion of the first adhesive member 381 based on a width direction (e.g., the X-axis direction in FIG. 6) of the first housing 310. The length of the first adhesive member 381 may decrease from the central portion of the first adhesive member 381 toward the outer portion (e.g., the first outer portion 3814). The length of the first adhesive member 381 may decrease from the central portion of the first adhesive member 381 toward the inner portion (e.g., the first inner portion 3815).

According to an embodiment, the length (e.g., the length in the Y-axis direction in FIG. 6) of the first adhesive member 381 may vary along the width direction (e.g., the X-axis direction in FIG. 6) of the first housing 310 by a shape of the first upper portion 3816 formed to be curved, a shape of the first lower portion 3817 formed to be curved, a shape of the first protruding portion 3812 formed to protrude, or a shape of the second protruding portion 3813 formed to protrude.

According to an embodiment, the first outer portion 3814 may be defined and/or interpreted as being formed to be concave relative to the first protruding portion 3812. For example, the first outer portion 3814 may be formed by cutting at least a portion of the first body portion 3811.

According to an embodiment, the first inner portion 3815 may be defined and/or interpreted as being formed to be concave relative to the second protruding portion 3813. For example, the first inner portion 3815 may be formed by cutting at least a portion of the first body portion 3811.

According to an embodiment, by the shape of the first adhesive member 381, an adhesive area (or an adhesive region) of the first adhesive member 381 may be largest at the central portion (e.g., the central portion based on the X-axis direction in FIG. 6) of the first adhesive member 381 and may decrease toward the outer portion (e.g., the first outer portion 3814) or the inner portion (e.g., the first inner portion 3815) of the first adhesive member 381.

According to an embodiment, when the state of the electronic device 101 or the state of the foldable housing (e.g., the foldable housing 201 of FIG. 4) is the unfolded state (e.g., FIG. 2), if twisting occurs with respect to the first housing 310 (or the first side surface 313), torsion may occur in the first adhesive member 381. As the first adhesive member 381 is configured such that the adhesive area decreases toward the first side surface 313, occurrence of torsion may be decreased or limited in an area (e.g., the outer portion 3812, 3814 of the first adhesive member 381) adjacent to the first side surface 313. Accordingly, when twisting occurs with respect to the first housing 310, as adhesive force between the first adhesive member 381 and the lower surface of the first recess 312 is not degraded, detachment of the first battery 371 from the first recess 312 may be decreased or limited.

According to an embodiment, when the state of the electronic device 101 or the state of the foldable housing (e.g., the foldable housing 201 of FIG. 4) is the folded state (e.g., FIG. 3), if twisting occurs with respect to the first housing 310 (or the first side surface 313 or the first edge portion 314), torsion may occur in the first adhesive member 381. As the first adhesive member 381 is configured such that the adhesive area decreases toward the first side surface 313 or the first edge portion 314, occurrence of torsion may be decreased or limited in an area (e.g., the outer portion 3812, 3814 or the inner portion 3813, 3815 of the first adhesive member 381) adjacent to the first side surface 313. Accordingly, when twisting occurs with respect to the first housing 310, as adhesive force between the first adhesive member 381 and the lower surface of the first recess 312 is not degraded, detachment of the first battery 371 from the first recess 312 may be decreased or limited.

Referring to FIGS. 7 to 8B, a first battery assembly 301 may include the first battery 371, the first adhesive member 381, or the first film member 391.

According to an embodiment, the first battery assembly 301 may be at least partially disposed or located in a second recess (e.g., the first recess 312 of FIGS. 5 to 6) of the first support member 311. For example, at least a portion of the first battery assembly 301 may be received in the second recess (e.g., the first recess 312 of FIGS. 5 to 6).

According to an embodiment, the first battery assembly 301 may be disposed between the first support member 311 and a rear cover (e.g., the cover window 315 of FIG. 5). For example, the first support member 311 may be disposed between at least a portion of a rear surface (e.g., a surface facing the -Z direction in FIGS. 5 to 7) of the first support member 311 and a cover window (e.g., the cover window 315 of FIG. 5). Although not illustrated, the first battery assembly 301 may be disposed between the first support member 311 and a first display area (e.g., the first display area 351 of FIG. 5). For example, the first support member 311 may be disposed between at least a portion of a front surface (e.g., a surface facing the +Z direction in FIGS. 5 to 7) of the first support member 311 and a first display area (e.g., the first display area 351 of FIG. 5).

According to an embodiment, the first film member 391 may surround at least a portion of the first battery 371. The first film member 391 may include an inner surface or an outer surface facing a direction opposite to the inner surface. The inner surface of the first film member 391 may be adhered to the first battery 371. The first film member 391 may be at least partially foldable. In a state in which the state of the first film member 391 is a folded state, the first film member 391 may surround or cover at least a portion of at least three surfaces of the first battery 371. The first film member 391 may surround at least a portion of one surface or a front surface (e.g., a surface facing the +Z direction in FIGS. 5 to 8B) of the first battery 371. The first film member 391 may surround at least a portion of an inner side surface (e.g., a surface facing the +X direction in FIGS. 5 to 8B) of the first battery 371. The first film member 391 may surround at least a portion of another surface or a rear surface (e.g., a surface facing the -Z direction in FIGS. 5 to 8B) of the first battery 371.

According to an embodiment, at least a portion of the first film member 391 may be located between the first battery 371 and the first adhesive member 381. For example, at least a portion of the first film member 391 may be disposed between a front surface (e.g., a surface facing the +Z direction in FIG. 8B) of the first battery 371 and the first adhesive member 381.

According to an embodiment, as the first film member 391 is adhered to the first battery 371 and the first adhesive member 381 is adhered to the first film member 391, the first battery 371 may be adhered or fixed to a second support member (e.g., the first support member 311 of FIGS. 5 to 7) through the first adhesive member 381. For example, the first battery 371 may be adhered, fixed, or coupled to the first recess (e.g., the first recess 312 of FIGS. 5 to 6) of the first support member 311 through the first adhesive member 381 and/or the first film member 391.

In FIG. 9, a state in which the state of the first film member 391 is an unfolded state is illustrated. The first film member 391 of FIG. 9 may surround at least three surfaces of the first battery 371 by being at least partially folded.

According to an embodiment, the first film member 391 may include a film including an inner surface and an outer surface facing a direction opposite to the inner surface. A surface of the first film member 391 illustrated in FIG. 9 may be the inner surface of the first film member 391 adhered to the first battery 371.

According to an embodiment, the first film member 391 may include a 1-1st film area 3911. The 1-1st film area 3911 may be adhered on a front surface (e.g., a surface facing the +Z direction in FIG. 8B) of the first battery 371. The 1-1st film area 3911 may be located between the first support member 311 and the first battery 371. The 1-1st film area 3911 may be located between the first battery 371 and the first adhesive member 381.

According to an embodiment, the first film member 391 may include a 1-2nd film area 3912. The 1-2nd film area 3912 may extend from the 1-1st film area 3911. At least a portion of the 1-2nd film area 3912 may be adhered to an inner side surface (e.g., a surface facing the +X direction in FIG. 8B) of the first battery 371. For example, the 1-2nd film area 3912 may be at least partially disposed on at least a portion of a side surface of the first battery 371. A remainder of the 1-2nd film area 3912 may be adhered to a rear surface (e.g., a surface facing the -Z direction in FIG. 8B) of the first battery 371. The 1-2nd film area 3912 may be folded relative to the 1-1st film area 3911.

According to an embodiment, the first film member 391 may include a 1-3rd film area 3913. The 1-3rd film area 3913 may extend from the 1-2nd film area 3912. The 1-3rd film area 3913 may be adhered to a rear surface (e.g., a surface facing the -Z direction in FIG. 8B) of the first battery 371. The 1-3rd film area 3913 may be folded relative to the 1-2nd film area 3912. At least a portion of the first battery 371 may be located between at least a portion of the 1-3rd film area 3913 and the 1-1st film area 3911.

According to an embodiment, the 1-3rd film area 3913 of the first film member 391 may be defined as a portion for facilitating separation of the first battery 371 from the first support member 311. For example, the first film member 391 or the 1-3rd film area 3913 may be utilized as a handle or a knob for facilitating separation of the first battery 371 from the first recess 312, for repair of the first battery 371 disposed in the first recess 312 of the first support member 311 or for replacement of the battery. For example, when the 1-3rd film area 3913 is pulled, the first battery 371 disposed in the first recess 312 may be lifted or separated from the first recess 312. The first film member 391 may be defined as a member capable of facilitating separation of the first battery 371. The first film member 391 may be referred to as a first pull-tab tape.

According to an embodiment, the first film member 391 may include a 1-4th film area 3914. The 1-4th film area 3914 may extend from the 1-1st film area 3911. The 1-4th film area 3914 may face a direction opposite to the 1-2nd film area 3912. The 1-1st film area 3911 may be disposed and/or located between the 1-2nd film area 3912 and the 1-4th film area 3914. At least a portion of the 1-4th film area 3914 may be adhered to an outer side surface (e.g., a surface facing the -X direction in FIG. 8B) of the first battery 371. A remainder of the 1-4th film area 3914 may be adhered to a rear surface (e.g., a surface facing the -Z direction in FIG. 8B) of the first battery 371. The 1-4th film area 3914 may be folded relative to the 1-1st film area 3911.

According to an embodiment, film areas 3911, 3912, 3913, 3914 of the first film member 391 may include a polyethylene terephthalate (PET) material, but the disclosure is not limited thereto. According to an embodiment, the first film member 391 may include an adhesive configured to adhere at least a portion of the first film member 391 to the first battery 371. The adhesive may include at least one of an optical clear adhesive (OCA), a pressure sensitive adhesive (PSA), a thermally reactive adhesive, a general adhesive, or a double-sided tape.

According to an embodiment, the first film member 391 may include a plurality of first adhesive portions 3915. The plurality of first adhesive portions 3915 may be disposed on an inner surface (e.g., an inner surface facing the first battery 371) of each of the 1-1st film area 3911, the 1-2nd film area 3912, the 1-3rd film area 3913, or the 1-4th film area 3914. The plurality of first adhesive portions 3915 may include an adhesive. The plurality of first adhesive portions 3915 may be spaced apart from each other. According to the illustrated embodiment, the plurality of first adhesive portions 3915 may be disposed based on a transverse direction and a length direction, but is not limited thereto and may be disposed or non-disposed in various directions.

According to an embodiment, the first film member 391 may include a first adhesive area 3916. The first adhesive area 3916 may be disposed on an inner surface of the 1-2nd film area 3912. The first adhesive area 3916 may be disposed on a portion of the 1-2nd film area 3912. For example, an area of the first adhesive area 3916 may be smaller than an area of the 1-2nd film area 3912. The first adhesive area 3916 may adhere at least a portion of the inner surface of the 1-2nd film area 3912 to an inner side surface (e.g., a surface facing the +X direction in FIG. 8B) of the first battery 371. The first adhesive area 3916 may include an adhesive. The first adhesive area 3916 may be referred to as a first glue area.

According to an embodiment, the first film member 391 may include a first non-adhesive area 3918. The first non-adhesive area 3918 may be defined as an area in which an adhesive is not disposed on the inner surface of the 1-2nd film area 3912. For example, when the first film member 391 is adhered to the first battery 371, an area corresponding to the first non-adhesive area 3918 on the inner surface of the 1-2nd film area 3912 may not be adhered to the first battery 371. The first non-adhesive area 3918 may be referred to as a first non-glue area. The first non-adhesive area 3818 may be spaced apart from the first adhesive area 3916.

According to an embodiment, the 1-2nd film area 3912 of the first film member 391 may be configured such that a partial area of the 1-2nd film area 3912 is adhered to the first battery 371 and a remaining area of the 1-2nd film area 3912 is not adhered to the first battery 371, by the first non-adhesive area 3918. Accordingly, when twisting occurs with respect to the first housing (e.g., the first housing 310 of FIG. 5), occurrence of torsion may be limited or decreased in an adhesive (e.g., a portion of the plurality of first adhesive portions 3915, or the first adhesive area 3916) disposed on the 1-2nd film area 3912. Accordingly, when twisting occurs in the first housing 310, as adhesive force between the 1-2nd film area 3912 and the first battery 371 is not degraded, detachment of the first battery 371 from the first film member 391 may be decreased or limited.

According to an embodiment, the first film member 391 may include a third adhesive area 3917. The third adhesive area 3917 may be disposed on an inner surface of the 1-3rd film area 3913. The third adhesive area 3917 may be disposed on a portion of the 1-3rd film area 3913. For example, an area of the third adhesive area 3917 may be smaller than an area of the 1-3rd film area 3913. The third adhesive area 3917 may adhere at least a portion of the inner surface of the 1-3rd film area 3913 to a front surface (e.g., a surface facing the -Z direction in FIG. 8B) of the first battery 371. The third adhesive area 3917 may include an adhesive. The third adhesive area 3917 may be referred to as a third glue area.

According to an embodiment, the first film member 391 may include a third non-adhesive area 39171. The third non-adhesive area 39171 may be defined as an area in which an adhesive is not disposed on the inner surface of the 1-3rd film area 3913. For example, when the first film member 391 is adhered to the first battery 371, an area corresponding to the third non-adhesive area 39171 on the inner surface of the 1-3rd film area 3913 may not be adhered to the first battery 371. The third non-adhesive area 39171 may be located at a corner of the 1-3rd film area 3913. The third non-adhesive area 39171 may be referred to as a third non-glue area.

According to an embodiment, a film area, an adhesive area, or a non-adhesive area of the first film member 391 may be referred to as a film portion, an adhesive portion, or a non-adhesive portion of the first film member 391.

According to an embodiment, the first film member 391 may include a first protruding area 39121. The first protruding area 39121 may protrude or extend from at least a portion of the 1-2nd film area 3912. The first protruding area 39121 may be adhered to a lower side surface (e.g., a surface facing the -Y direction in FIGS. 5 to 8B) of the first battery 371. The first protruding area 39121 may be adhered or coupled to at least a portion of the first battery 371 through an adhesive.

According to an embodiment, the first film member 391 may include a second protruding area 39141. The second protruding area 39141 may protrude or extend from at least a portion of the 1-4th film area 3914. The second protruding area 39141 may be adhered to a lower side surface (e.g., a surface facing the -Y direction in FIGS. 5 to 8B) of the first battery 371. The second protruding area 39141 may be adhered or coupled to at least a portion of the first battery 371 through an adhesive.

FIG. 10 is an exploded perspective view illustrating an electronic device according to an embodiment of the disclosure.

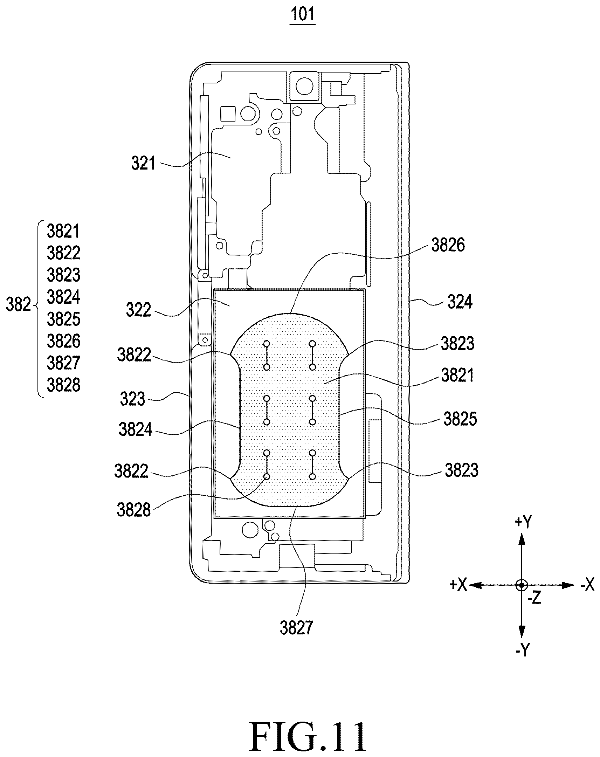

FIG. 11 is a plan view illustrating an electronic device according to an embodiment of the disclosure.

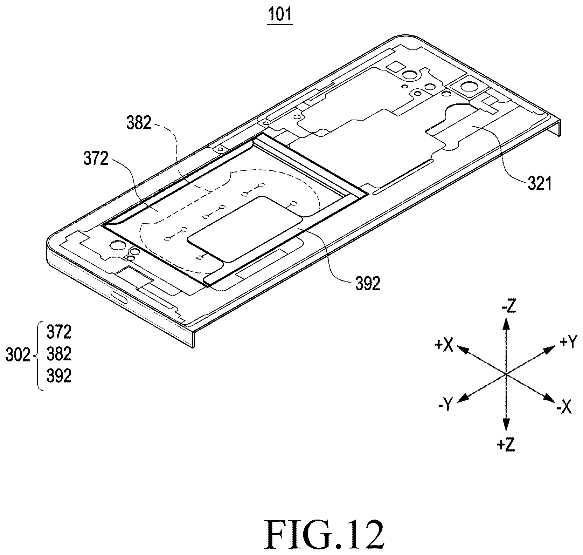

FIG. 12 is an assembled perspective view illustrating an electronic device according to an embodiment of the disclosure.

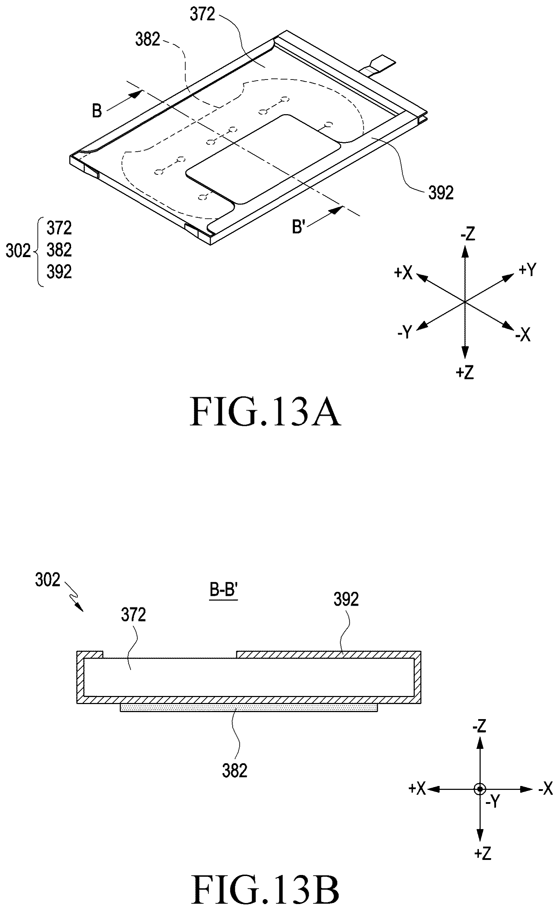

FIG. 13A is a perspective view illustrating a second battery according to an embodiment of the disclosure.

FIG. 13B is a cross-sectional view taken along line B-B' of FIG. 13A according to an embodiment of the disclosure.

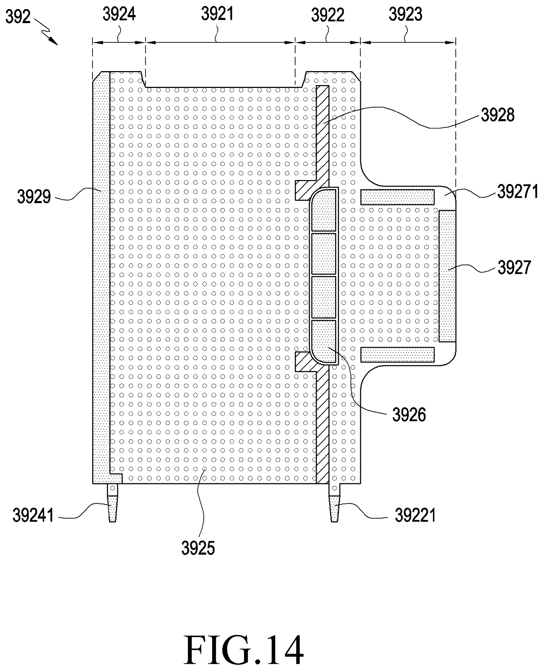

FIG. 14 is a plan view illustrating a second film member according to an embodiment of the disclosure.

The embodiments of FIGS. 10 to 14 may be combinable with the embodiments of FIGS. 1 to 9 or the embodiment of FIG. 15.

Referring to FIGS. 10 to 13B, an electronic device 101 (e.g., the electronic device 101 of FIGS. 2 to 5) may include a second housing 320, a flexible display 350, a second battery 372, a second adhesive member 382, or a second film member 392.

Although only the second housing 320, the second battery 372, the second adhesive member 382, or the second film member 392 is illustrated in FIGS. 10 to 12, the embodiments of FIGS. 10 to 14 may be implemented or used together with the configurations of the first housing 310, the first battery 371, the first adhesive member 381, or the first film member 391 of FIGS. 5 to 9. Depending on embodiments, some of the above-described components may be omitted.

The configuration of the second housing 320 or the flexible display 350 of FIGS. 10 to 13B may be identical in whole or portion to the configuration of the second housing 220 or the flexible display 250 of FIG. 4.

According to an embodiment, the flexible display 350 may include a first display area 351 (e.g., the first display area 251 of FIG. 4), a second display area 352 (e.g., the second display area 252 of FIG. 4), or a folding area 353 (e.g., the folding area 253 of FIG. 4).

According to an embodiment, the second housing 320 may include a second support member 321 (e.g., the second plate 223 of FIG. 4). The second support member 321 may be defined and/or referred to as a second bracket, a second front member, or a second plate. The second housing 320 may be defined and/or referred to as a second housing portion.

According to an embodiment, the second support member 321 may provide a space in which various components of the electronic device 101 may be disposed. A portion (e.g., the second display area 352) of a foldable display 350 may be disposed or received on one surface (e.g., a surface facing the +Z direction in FIG. 10) of the second support member 321. The second battery 372 or a second circuit board (e.g., the second printed circuit board 242 of FIG. 4) may be disposed or received on another surface (e.g., a surface facing the -Z direction in FIG. 10) of the second support member 321.

According to an embodiment, the second housing 320 may include a rear cover 325 (e.g., the rear cover 225 of FIG. 4). The rear cover 325 may cover the other surface (e.g., the surface facing the -Z direction in FIG. 10) of the second support member 321.

According to an embodiment, the second support member 321 may include a second recess 322. The second recess 322 may be recessedly formed in the other surface (e.g., the surface facing the -Z direction in FIG. 10) of the second support member 321. The second recess 322 may be defined and/or referred to as a second groove, a second concave portion, or a second seating portion. The second battery 372 or a second battery assembly (e.g., the second battery assembly 302 of FIG. 13B) may be disposed or received in the second recess 322.

According to an embodiment, the second recess 322 may provide a space for receiving the second battery 372. A depth (e.g., a depth in the Z-axis direction in FIG. 10) of the second recess 322 may be greater than a thickness (e.g., a thickness in the Z-axis direction in FIG. 10) of the second battery 372. The depth of the second recess 322 may be substantially the same as the thickness of the second battery 372. The depth of the second recess 322 may be less than the thickness of the second battery 372. A size (e.g., a size or area on a plane combined in the X-axis direction and the Y-axis direction in FIG. 10) of the second recess 322 may be greater than a size (e.g., a size or area on a plane combined in the X-axis direction and the Y-axis direction in FIG. 10) of the second battery 372. The size of the second recess 322 may be substantially the same as the size of the second battery 372.

According to an embodiment, a shape of the second recess 322 may correspond to a shape of the second battery 372. For example, when the second battery 372 is a bar type, the second recess 322 may have a bar shape. The shape of the second recess 322 is not limited thereto and may have various shapes capable of receiving the second battery 372.

According to an embodiment, the second support member 321 may include a second side surface 323 (e.g., the 2-1st side surface 221a of FIG. 4). The second side surface 323 may form at least a portion of a side surface of the second support member 321. The second side surface 323 may face opposite to a second edge portion 324. The second side surface 323 may be defined and/or referred to as a second side wall. The second support member 321 may be defined and/or interpreted as being connected to the second side surface 323.

According to an embodiment, the second support member 321 may include the second edge portion 324. The second edge portion 324 may be connected to a hinge assembly (e.g., the hinge assembly 230 of FIG. 4). The second edge portion 324 may be connected to a hinge structure (e.g., the hinge structure 231 of FIG. 4).

According to an embodiment, the second battery 372 may supply power to at least one component of the electronic device 101. The second battery 372 may supply power to at least one component disposed in the second housing 320. Depending on embodiments, the second battery 372 may supply power to at least one component of a first housing (e.g., the first housing 310 of FIG. 10). The second battery 372 may be disposed inside the second housing 320.

According to an embodiment, the second battery 372 may be disposed on the second recess 322 of the second support member 321. For example, the second battery 372 may be at least partially received in the second recess 322.

According to an embodiment, the second battery 372 may be located between the second support member 321 and the rear cover 325. For example, one surface (e.g., a surface facing the +Z direction in FIG. 10) of the second battery 372 may face the second support member 321. For example, another surface (e.g., a surface facing the -Z direction in FIG. 10) of the second battery 372 may face the rear cover 325.

According to an embodiment, the second adhesive member 382 may be disposed in the second recess 322. The second adhesive member 382 may be configured to adhere the second battery 372 or a second battery assembly 302 (e.g., the second battery assembly 302 of FIG. 13B) to the second support member 321. For example, the second adhesive member 382 may adhere the second battery 372 or the second battery assembly 302 to at least a portion (e.g., a lower surface of the second recess 322) of the second recess 322. According to an embodiment, the second battery 372 may be coupled to the second recess 322 through the second adhesive member 382.

According to an embodiment, the second adhesive member 382 may include a double-sided tape. For example, one surface (e.g., a surface facing the +Z direction in FIG. 10) of the second adhesive member 382 may be adhered to the second recess 322, and another surface (e.g., a surface facing the -Z direction in FIG. 10) of the second adhesive member 382 may be adhered to the second film member 392. The second adhesive member 382 may be defined and/or interpreted as being adhered to the second battery 372. The second adhesive member 382 may be referred to as a second battery tape or a second battery front tape.

According to an embodiment, an area (e.g., an area on a plane combined with the X-axis and the Y-axis in FIG. 10) of the second adhesive member 382 may be smaller than an area (e.g., an area on a plane combined with the X-axis and the Y-axis in FIG. 10) of the second battery 372. The area of the second adhesive member 382 may be at least half of the area of the second battery 372.

According to an embodiment, the second film member 392 may surround at least a portion of the second battery 372. The second film member 392 may surround at least a portion of at least three surfaces of the second battery 372. For example, the second film member 392 may surround at least a portion of an upper surface or a front surface (e.g., a surface facing the +Z direction in FIG. 10) of the second battery 372, at least a portion of an inner surface (e.g., a surface facing the -X direction in FIG. 10) of the second battery 372, or at least a portion of a lower surface or a rear surface (e.g., a surface facing the -Z direction in FIG. 10) of the second battery 372.

According to an embodiment, the second film member 392 may facilitate separation of the second battery 372 so that repair or replacement of the second battery 372 disposed on the second recess 322 is facilitated.

According to an embodiment (e.g., FIG. 11), the second adhesive member 382 may include a second body portion 3821. The second body portion 3821 may form an overall body of the second adhesive member 382.

According to an embodiment, the second adhesive member 382 may include a second outer portion 3824. The second outer portion 3824 may be a portion of the second body portion 3821 facing the second side surface 323. The second outer portion 3824 may be disposed substantially parallel to the second side surface 323. The second outer portion 3824 may be defined and/or referred to as an outer side surface of the second adhesive member 382 or the second body portion 3821.

According to an embodiment, the second adhesive member 382 may include a second inner portion 3825. The second inner portion 3825 may face opposite to the first outer portion 3824. The second inner portion 3825 may be disposed substantially parallel to the first outer portion 3824. The second inner portion 3825 may be disposed substantially parallel to the second side surface 323. The second inner portion 3825 may be defined and/or referred to as an inner side surface of the second adhesive member 382 or the second body portion 3821.

According to an embodiment, the second adhesive member 382 may include a second upper portion 3826. The second upper portion 3826 may face opposite to a second lower portion 3827. The second upper portion 3826 may face an upper side surface (e.g., the 2-2nd side surface 221b of FIG. 4) of the second housing 320. The second upper portion 3826 may be formed to be at least partially curved. For example, the second upper portion 3826 may include a curved surface. The second upper portion 3826 may be defined as a partial configuration of the at least one second curvature portion 3826, 3827 of the second adhesive member 382. The second upper portion 3826 may be defined and/or referred to as a third curvature portion.

According to an embodiment, the second upper portion 3826 may connect the second outer portion 3824 and the second inner portion 3825. The second upper portion 3826 may be defined and/or interpreted as connecting the third protruding portion 3822 and the fourth protruding portion 3823.

According to an embodiment, the second adhesive member 382 may include the second lower portion 3827. The second lower portion 3827 may face opposite to the second upper portion 3826. The second lower portion 3826 may face a lower side surface (e.g., the 2-3rd side surface 221c of FIG. 4) of the second housing 320. The second lower portion 3827 may be formed to be at least partially curved. For example, the second lower portion 3827 may include a curved surface. The second lower portion 3827 may be defined as a partial configuration of the at least one second curvature portion 3826, 3827 of the second adhesive member 382. The second lower portion 3827 may be defined and/or referred to as a fourth curvature portion.

According to an embodiment, the second adhesive member 382 may include at least one second curvature portion 3826, 3827. The at least one second curvature portion 3826, 3827 may connect the second outer portion 3824 and the second inner portion 3825.

According to an embodiment, the second lower portion 3827 may connect the second outer portion 3824 and the second inner portion 3825. The second lower portion 3827 may be defined and/or interpreted as connecting the third protruding portion 3822 and the fourth protruding portion 3823.

According to an embodiment, the second adhesive member 382 may include the third protruding portion 3822. The third protruding portion 3822 may be formed to protrude from at least a portion of the second outer portion 3824. For example, the third protruding portion 3822 may be defined as protruding or extending from the second outer portion 3824 toward the second side surface 323. The third protruding portion 3822 may be defined and/or referred to as a third extension.

According to an embodiment, the third protruding portion 3822 may be provided as at least one or more. According to the illustrated embodiment, the third protruding portion 3822 is provided as two, but is not limited thereto, and may be provided as one or three or more.

According to an embodiment, the third protruding portion 3822 (e.g., the third protruding portion 3822 located on the +Y direction side in FIG. 11) may connect the second upper portion 3826 and the second outer portion 3824. The third protruding portion 3822 (e.g., the third protruding portion 3822 located on the -Y direction side in FIG. 11) may connect the second lower portion 3827 and the second outer portion 3824.

According to an embodiment, a distance (e.g., a distance in the X-axis direction in FIG. 11) between the third protruding portion 3822 and the second side surface 323 may be smaller than a distance (e.g., a distance in the X-axis direction in FIG. 11) between the second outer portion 3824 and the second side surface 323.

According to an embodiment, the second adhesive member 382 may include the fourth protruding portion 3823. The fourth protruding portion 3823 may be formed to protrude from at least a portion of the second inner portion 3825. For example, the fourth protruding portion 3823 may be defined as protruding or extending from the second inner portion 3825 toward the second edge portion 324. The fourth protruding portion 3823 may protrude from the second inner portion 3825 toward a hinge structure (e.g., the hinge structure 231 of FIG. 4). The fourth protruding portion 3823 may face opposite to the third protruding portion 3822. The fourth protruding portion 3823 may be defined and/or referred to as a fourth extension.

According to an embodiment, the fourth protruding portion 3823 may be provided as at least one or more. According to the illustrated embodiment, the fourth protruding portion 3823 is provided as two, but is not limited thereto, and may be provided as one or three or more.

According to an embodiment, the fourth protruding portion 3823 (e.g., the fourth protruding portion 3823 located on the +Y direction side in FIG. 11) may connect the second upper portion 3826 and the second inner portion 3825. The fourth protruding portion 3823 (e.g., the fourth protruding portion 3823 located on the -Y direction side in FIG. 11) may connect the second lower portion 3827 and the second inner portion 3825.

According to an embodiment, a distance (e.g., a distance in the X-axis direction in FIG. 11) between the fourth protruding portion 3823 and the second edge portion 324 may be smaller than a distance (e.g., a distance in the X-axis direction in FIG. 11) between the second inner portion 3825 and the second edge portion 324.

According to an embodiment, the second adhesive member 382 may include a second penetrating structure 3828. The second penetrating structure 3828 may be formed to penetrate through at least a portion of the second body portion 3821. The second penetrating structure 3828 may include an opening. The second penetrating structure 3828 may include a slit. The second penetrating structure 3828 may be formed in at least a portion of the second adhesive member 382.

According to an embodiment, the second penetrating structure 3828 may form or provide a passage for discharging an air bubble formed or remaining between the second adhesive member 382 and the second recess 322 when the second adhesive member 382 is adhered to at least a portion (e.g., the lower surface of the second recess 322) of the second recess 322.

According to an embodiment, the second penetrating structure 3828 may form or provide a passage for discharging an air bubble formed (or remaining) between the second adhesive member 382 and the second film member 392 when the second adhesive member 382 is adhered to at least a portion of the second film member 392.

According to an embodiment, the second adhesive member 382 may be adhered to a portion of the second recess 322. The second adhesive member 382 may be adhered to a portion of the second support member 321.

According to an embodiment, a length or height (e.g., a length or height in the Y-axis direction in FIG. 11) of the second adhesive member 382 may vary along a direction from the second edge portion 324 toward the second side surface 323 or a direction from the second side surface 323 toward the second edge portion 324 (e.g., the X-axis direction in FIG. 11). For example, the length of the second adhesive member 382 may be longest at a central portion of the second adhesive member 382 based on a width direction (e.g., the X-axis direction in FIG. 11) of the second housing 320. The length of the second adhesive member 382 may decrease from the central portion of the second adhesive member 382 toward the outer portion (e.g., the second outer portion 3824). The length of the second adhesive member 382 may decrease from the central portion of the second adhesive member 382 toward the inner portion (e.g., the second inner portion 3825).

According to an embodiment, the length (e.g., the length in the Y-axis direction in FIG. 11) of the second adhesive member 382 may vary along the width direction (e.g., the X-axis direction in FIG. 11) of the second housing 320 by a shape of the second upper portion 3826 formed to be curved, a shape of the second lower portion 3827 formed to be curved, a shape of the third protruding portion 3822 formed to protrude, or a shape of the fourth protruding portion 3823 formed to protrude.

According to an embodiment, the second outer portion 3824 may be defined and/or interpreted as being formed to be concave relative to the third protruding portion 3822. For example, the second outer portion 3824 may be formed by cutting at least a portion of the second body portion 3821.

According to an embodiment, the second inner portion 3825 may be defined and/or interpreted as being formed to be concave relative to the fourth protruding portion 3823. For example, the second inner portion 3825 may be formed by cutting at least a portion of the second body portion 3821.

According to an embodiment, by the shape of the second adhesive member 382, an adhesive area (or an adhesive region) of the second adhesive member 382 may be largest at the central portion (e.g., the central portion based on the X-axis direction in FIG. 11) of the second adhesive member 382 and may decrease toward the outer portion (e.g., the second outer portion 3824) or the inner portion (e.g., the second inner portion 3825) of the second adhesive member 382.

According to an embodiment, when the state of the electronic device 101 or the state of the foldable housing (e.g., the foldable housing 201 of FIG. 4) is the unfolded state (e.g., FIG. 2), if twisting occurs with respect to the second housing 320 (or the second side surface 323), torsion may occur in the second adhesive member 382. As the second adhesive member 382 is configured such that the adhesive area decreases toward the second side surface 323, occurrence of torsion may be decreased or limited in an area (e.g., the outer portion 3822, 3824 of the second adhesive member 382) adjacent to the second side surface 323. Accordingly, when twisting occurs with respect to the second housing 320, as adhesive force between the second adhesive member 382 and the lower surface of the second recess 322 is not degraded, detachment of the second battery 372 from the second recess 322 may be decreased or limited.

According to an embodiment, when the state of the electronic device 101 or the state of the foldable housing (e.g., the foldable housing 201 of FIG. 4) is the folded state (e.g., FIG. 3), if twisting occurs with respect to the second housing 320 (or the second side surface 323 or the second edge portion 324), torsion may occur in the second adhesive member 382. As the second adhesive member 382 is configured such that the adhesive area decreases toward the second side surface 323 or the second edge portion 324, occurrence of torsion may be decreased or limited in an area (e.g., the outer portion 3822, 3824 or the inner portion 3823, 3825 of the second adhesive member 382) adjacent to the second side surface 323. Accordingly, when twisting occurs with respect to the second housing 320, as adhesive force between the second adhesive member 382 and the lower surface of the second recess 322 is not degraded, detachment of the second battery 372 from the second recess 322 may be decreased or limited.

Referring to FIGS. 12 to 13B, a second battery assembly 302 may include the second battery 372, the second adhesive member 382, or the second film member 392.

According to an embodiment, the second battery assembly 302 may be at least partially disposed or located in a second recess (e.g., the second recess 322 of FIGS. 10 to 11) of the second support member 321. For example, at least a portion of the second battery assembly 302 may be received in the second recess (e.g., the second recess 322 of FIGS. 10 to 11).

According to an embodiment, the second battery assembly 302 may be disposed between the second support member 321 and a rear cover (e.g., the rear cover 325 of FIG. 10). For example, the second support member 321 may be disposed between at least a portion of a rear surface (e.g., a surface facing the -Z direction in FIGS. 10 to 12) of the second support member 321 and a rear cover (e.g., the rear cover 325 of FIG. 10). Although not illustrated, the second battery assembly 302 may be disposed between the second support member 321 and a second display area (e.g., the second display area 352 of FIG. 10). For example, the second support member 321 may be disposed between at least a portion of a front surface (e.g., a surface facing the +Z direction in FIGS. 10 to 12) of the second support member 321 and a second display area (e.g., the second display area 352 of FIG. 10).

According to an embodiment, the second film member 392 may surround at least a portion of the second battery 372. The second film member 392 may include an inner surface or an outer surface facing a direction opposite to the inner surface. The inner surface of the second film member 392 may be adhered to the second battery 372. The second film member 392 may be at least partially foldable. In a state in which the state of the second film member 392 is a folded state, the second film member 392 may surround or cover at least a portion of at least three surfaces of the second battery 372. The second film member 392 may surround at least a portion of one surface or a front surface (e.g., a surface facing the +Z direction in FIGS. 10 to 13B) of the second battery 372. The second film member 392 may surround at least a portion of an inner side surface (e.g., a surface facing the -X direction in FIGS. 10 to 13B) of the second battery 372. The second film member 392 may surround at least a portion of another surface or a rear surface (e.g., a surface facing the -Z direction in FIGS. 10 to 13B) of the second battery 372.

According to an embodiment, at least a portion of the second film member 392 may be located between the second battery 372 and the second adhesive member 382. For example, at least a portion of the second film member 392 may be disposed between a front surface (e.g., a surface facing the +Z direction in FIG. 13B) of the second battery 372 and the second adhesive member 382.

According to an embodiment, as the second film member 392 is adhered to the second battery 372 and the second adhesive member 382 is adhered to the second film member 392, the second battery 372 may be adhered or fixed to a second support member (e.g., the second support member 321 of FIGS. 10 to 12) through the second adhesive member 382. For example, the second battery 372 may be adhered, fixed, or coupled to the second recess (e.g., the second recess 322 of FIGS. 10 to 11) of the second support member 321 through the second adhesive member 382 and/or the second film member 392.

In FIG. 14, a state in which the state of the second film member 392 is an unfolded state is illustrated. The second film member 392 of FIG. 14 may surround at least three surfaces of the second battery 372 by being at least partially folded.

According to an embodiment, the second film member 392 may include a film including an inner surface and an outer surface facing a direction opposite to the inner surface. A surface of the second film member 392 illustrated in FIG. 14 may be the inner surface of the second film member 392 adhered to the second battery 372.

According to an embodiment, the second film member 392 may include a 2-1st film area 3921. The 2-1st film area 3921 may be adhered on a front surface (e.g., a surface facing the +Z direction in FIG. 13B) of the second battery 372. The 2-1st film area 3921 may be located between the second support member 321 and the second battery 372. The 2-1st film area 3921 may be located between the second battery 372 and the second adhesive member 382.

According to an embodiment, the second film member 392 may include a 2-2nd film area 3922. The 2-2nd film area 3922 may extend from the 2-1st film area 3921. At least a portion of the 2-2nd film area 3922 may be adhered to an inner side surface (e.g., a surface facing the -X direction in FIG. 13B) of the second battery 372. For example, the 2-2nd film area 3922 may be at least partially disposed on at least a portion of a side surface of the second battery 372. A remainder of the 2-2nd film area 3922 may be adhered to a rear surface (e.g., a surface facing the -Z direction in FIG. 13B) of the second battery 372. The 2-2nd film area 3922 may be folded relative to the 2-1st film area 3921.

According to an embodiment, the second film member 392 may include a 2-3rd film area 3923. The 2-3rd film area 3923 may extend from the 2-2nd film area 3922. The 2-3rd film area 3923 may be adhered on a rear surface (e.g., a surface facing the -Z direction in FIG. 13B) of the second battery 372. The 2-3rd film area 3923 may be folded relative to the 2-2nd film area 3922. At least a portion of the second battery 372 may be located between at least a portion of the 2-3rd film area 3923 and the 2-1st film area 3921.

According to an embodiment, the 2-3rd film area 3923 of the second film member 392 may be defined as a portion for facilitating separation of the second battery 372 from the second support member 321. For example, the second film member 392 or the 2-3rd film area 3923 may be utilized as a handle or a knob for facilitating separation of the second battery 372 from the second recess 322, for repair of the second battery 372 disposed in the second recess 322 of the second support member 321 or for replacement of the battery. For example, when the 2-3rd film area 3923 is pulled, the second battery 372 disposed in the second recess 322 may be lifted or separated from the second recess 322. The second film member 392 may be defined as a member capable of facilitating separation of the second battery 372. The second film member 392 may be referred to as a second pull-tab tape.

According to an embodiment, the second film member 392 may include a 2-4th film area 3924. The 2-4th film area 3924 may extend from the 2-1st film area 3921. The 2-4th film area 3924 may face a direction opposite to the 2-2nd film area 3922. The 2-1st film area 3921 may be disposed and/or located between the 2-2nd film area 3922 and the 2-4th film area 3924. At least a portion of the 2-4th film area 3924 may be adhered to an outer side surface (e.g., a surface facing the +X direction in FIG. 13B) of the second battery 372. A remainder of the 2-4th film area 3924 may be adhered to a rear surface (e.g., a surface facing the -Z direction in FIG. 13B) of the second battery 372. The 2-4th film area 3924 may be folded relative to the 2-1st film area 3921.

According to an embodiment, film areas 3921, 3922, 3923, 3924 of the second film member 392 may include a polyethylene terephthalate (PET) material, but the disclosure is not limited thereto. According to an embodiment, the second film member 392 may include an adhesive configured to adhere at least a portion of the second film member 392 to the second battery 372. The adhesive may include at least one of an optical clear adhesive (OCA), a pressure sensitive adhesive (PSA), a thermally reactive adhesive, a general adhesive, or a double-sided tape.

According to an embodiment, the second film member 392 may include a plurality of second adhesive portions 3925. The plurality of second adhesive portions 3925 may be disposed on an inner surface (e.g., an inner surface facing the second battery 372) of each of the 2-1st film area 3921, the 2-2nd film area 3922, the 2-3rd film area 3923, or the 2-4th film area 3924. The plurality of second adhesive portions 3925 may include an adhesive. The plurality of second adhesive portions 3925 may be spaced apart from each other. According to the illustrated embodiment, the plurality of second adhesive portions 3925 may be disposed based on a transverse direction and a length direction, but is not limited thereto and may be disposed or non-disposed in various directions.

According to an embodiment, the second film member 392 may include a second adhesive area 3926. The second adhesive area 3926 may be disposed on an inner surface of the 2-2nd film area 3922. The second adhesive area 3926 may be disposed on a portion of the 2-2nd film area 3922. For example, an area of the second adhesive area 3926 may be smaller than an area of the 2-2nd film area 3922. The second adhesive area 3926 may adhere at least a portion of the inner surface of the 2-2nd film area 3922 to an inner side surface (e.g., a surface facing the -X direction in FIG. 13B) of the second battery 372. The second adhesive area 3926 may include an adhesive. The second adhesive area 3926 may be referred to as a second glue area.

According to an embodiment, the second film member 392 may include a second non-adhesive area 3928. The second non-adhesive area 3928 may be defined as an area in which an adhesive is not disposed on the inner surface of the 2-2nd film area 3922. For example, when the second film member 392 is adhered to the second battery 372, an area corresponding to the second non-adhesive area 3928 on the inner surface of the 2-2nd film area 3922 may not be adhered to the second battery 372. The second non-adhesive area 3928 may be referred to as a second non-glue area. The second non-adhesive area 3928 may be spaced apart from the second adhesive area 3926.

According to an embodiment, the 2-2nd film area 3922 of the second film member 392 may be configured such that a partial area of the 2-2nd film area 3922 is adhered to the second battery 372 and a remaining area of the 2-2nd film area 3922 is not adhered to the second battery 372, by the second non-adhesive area 3928. Accordingly, when twisting occurs with respect to the second housing (e.g., the second housing 320 of FIG. 10), occurrence of torsion may be limited or decreased in an adhesive (e.g., a portion of the plurality of second adhesive portions 3925, or the second adhesive area 3926) disposed on the 2-2nd film area 3922. Accordingly, when twisting occurs in the second housing 320, as adhesive force between the 2-2nd film area 3922 and the second battery 372 is not degraded, detachment of the second battery 372 from the second film member 392 may be decreased or limited.

According to an embodiment, the second film member 392 may include a fourth adhesive area 3927. The fourth adhesive area 3927 may be disposed on an inner surface of the 2-3rd film area 3923. The fourth adhesive area 3927 may be disposed on a portion of the 2-3rd film area 3923. For example, an area of the fourth adhesive area 3927 may be smaller than an area of the 2-3rd film area 3923. The fourth adhesive area 3927 may adhere at least a portion of the inner surface of the 2-3rd film area 3923 to a front surface (e.g., a surface facing the -Z direction in FIG. 13B) of the second battery 372. The fourth adhesive area 3927 may include an adhesive. The fourth adhesive area 3927 may be referred to as a fourth glue area.

According to an embodiment, the second film member 392 may include a fourth non-adhesive area 39271. The fourth non-adhesive area 39271 may be defined as an area in which an adhesive is not disposed on the inner surface of the 2-3rd film area 3923. For example, when the second film member 392 is adhered to the second battery 372, an area corresponding to the fourth non-adhesive area 39271 on the inner surface of the 2-3rd film area 3923 may not be adhered to the second battery 372. The fourth non-adhesive area 39271 may be located at a corner of the 2-3rd film area 3923. The fourth non-adhesive area 39271 may be referred to as a fourth non-glue area.

According to an embodiment, a film area, an adhesive area, or a non-adhesive area of the second film member 392 may be referred to as a film portion, an adhesive portion, or a non-adhesive portion of the second film member 392.

According to an embodiment, the second film member 392 may include a third protruding area 39221. The third protruding area 39221 may protrude or extend from at least a portion of the 2-2nd film area 3922. The third protruding area 39221 may be adhered to a lower side surface (e.g., a surface facing the -Y direction in FIGS. 10 to 13B) of the second battery 372. The third protruding area 39221 may be adhered or coupled to at least a portion of the second battery 372 through an adhesive.

According to an embodiment, the second film member 392 may include a fourth protruding area 39241. The fourth protruding area 39241 may protrude or extend from at least a portion of the 2-4th film area 3924. The fourth protruding area 39241 may be adhered to a lower side surface (e.g., a surface facing the -Y direction in FIGS. 10 to 13B) of the second battery 372. The fourth protruding area 39241 may be adhered or coupled to at least a portion of the second battery 372 through an adhesive.

FIG. 15 is a plan view illustrating an electronic device according to an embodiment of the disclosure.

The embodiment of FIG. 15 may be combined with the embodiments of FIGS. 1 to 14.

Referring to FIG. 15, an electronic device 101 (e.g., the electronic device 101 of FIGS. 2 to 4) may include a first housing 310, a second housing 320, a first adhesive member 381, or a second adhesive member 382.

The configuration of the first housing 310 or the first adhesive member 381 of FIG. 15 may be identical in whole or portion to the configuration of the first housing 310 or the first adhesive member 381 of FIGS. 5 to 9. The configuration of the second housing 320 or the second adhesive member 382 of FIG. 15 may be identical in whole or portion to the configuration of the second housing 320 or the second adhesive member 382 of FIGS. 10 to 14.

According to an embodiment, the electronic device 101 may include a foldable housing 300 (e.g., the foldable housing 201 of FIG. 4). The foldable housing may include the first housing 310 or the second housing 320. The foldable housing 300 may be referred to as a deformable housing. The first housing 310 may be referred to as a first housing portion. The second housing 320 may be referred to as a second housing portion.

According to an embodiment, the first housing 310 may include a first support member 311 (e.g., the first support member 311 of FIGS. 5 to 7). The second housing 320 may include a second support member 321 (e.g., the second support member 321 of FIGS. 10 to 12).

According to an embodiment, the first housing 310 may be rotatably connected to the second housing 320 through a hinge assembly (e.g., the hinge assembly 230 of FIG. 4) or a hinge structure (e.g., the hinge structure 231 of FIG. 4). The second housing 320 may be rotatably connected to the first housing 310 through a hinge assembly (e.g., the hinge assembly 230 of FIG. 4) or a hinge structure (e.g., the hinge structure 231 of FIG. 4).

According to an embodiment, the first adhesive member 381 may be disposed on the first support member 311. The second adhesive member 382 may be disposed on the second support member 321.

According to an embodiment, the first adhesive member 381 may include a first body portion 3811 (e.g., the first body portion 3811 of FIG. 6), a first protruding portion 3812 (e.g., the first protruding portion 3812 of FIG. 6), a second protruding portion 3813 (e.g., the second protruding portion 3813 of FIG. 6), a first outer portion 3814 (e.g., the first outer portion 3814 of FIG. 6), a first inner portion 3815 (e.g., the first inner portion 3815 of FIG. 6), a first upper portion 3816 (e.g., the first upper portion 3816 of FIG. 6), or a first lower portion 3817 (e.g., the first lower portion 3817 of FIG. 6).

According to an embodiment, the second adhesive member 382 may include a second body portion 3821 (e.g., the second body portion 3821 of FIG. 11), a third protruding portion 3822 (e.g., the third protruding portion 3822 of FIG. 11), a fourth protruding portion 3823 (e.g., the fourth protruding portion 3823 of FIG. 11), a second outer portion 3824 (e.g., the second outer portion 3824 of FIG. 11), a second inner portion 3825 (e.g., the second inner portion 3825 of FIG. 11), a second upper portion 3826 (e.g., the second upper portion 3826 of FIG. 11), or a second lower portion 3827 (e.g., the second lower portion 3827 of FIG. 11).

According to an embodiment, the first adhesive member 381 may adhere a first battery (e.g., the first battery 371 of FIGS. 5 to 9) to the first support member 311. The second adhesive member 382 may adhere a second battery (e.g., the second battery 372 of FIGS. 10 to 14) to the second support member 321. A size of the first battery may be different from a size of the second battery. For example, the size of the first battery may be larger than the size of the second battery. Depending on embodiments, the size of the first battery may be smaller than the size of the second battery. Depending on embodiments, the size of the first battery may be the same as the size of the second battery.

According to an embodiment, the first adhesive member 381 may have a first width w1 or a second width w2. The first width w1 or the second width w2 may be a width in a width direction (e.g., the X-axis direction in FIG. 15) of the electronic device 101 or the foldable housing 300.

According to an embodiment, the first width w1 may be a distance between the first outer portion 3814 and the first inner portion 3815. The first width w1 may be smaller than the second width w2.

According to an embodiment, the second width w2 may be a distance between the first protruding portion 3812 and the second protruding portion 3813. As the first protruding portion 3812 protrudes in an outward direction (e.g., the -X direction in FIG. 15) with respect to the first outer portion 3814 and the second protruding portion 3813 protrudes in an outward direction (e.g., the +X direction in FIG. 15) with respect to the first inner portion 3815, the second width w2 may be larger than the first width w1.

According to an embodiment, the second adhesive member 382 may have a third width w3 or a fourth width w4. The third width w3 or the fourth width w4 may be a width in a width direction (e.g., the X-axis direction in FIG. 15) of the electronic device 101 or the foldable housing 300.

According to an embodiment, the third width w3 may be a distance between the second outer portion 3824 and the second inner portion 3825. The third width w3 may be smaller than the fourth width w4.

According to an embodiment, the fourth width w4 may be a distance between the third protruding portion 3822 and the fourth protruding portion 3823. As the third protruding portion 3822 protrudes in an outward direction (e.g., the +X direction in FIG. 15) with respect to the second outer portion 3824 and the fourth protruding portion 3823 protrudes in an outward direction (e.g., the -X direction in FIG. 15) with respect to the second inner portion 3825, the fourth width w4 may be larger than the third width w3.

An electronic device may include a flexible display that is partially folded or unfolded. The electronic device including the flexible display may include a plurality of housings that are rotatably connected relative to each other.

A battery for supplying power to components of the electronic device may be disposed in each of the plurality of housings. The battery may be fixed to at least a portion of the housing through an adhesive such as a double-sided tape.

When the state of the housing of the electronic device is a folded state or an unfolded state, if twisting occurs in at least a portion of the housing, torsion may occur in the double-sided tape for fixing the battery to the housing. In such a case, as lifting occurs between the double-sided tape and the battery or between the double-sided tape and the housing, the battery may be detached from the housing.

According to an embodiment of the disclosure, an electronic device capable of limiting or reducing occurrence of torsion in an adhesive member even when twisting occurs in a housing may be provided.

According to an embodiment of the disclosure, a battery with enhanced retention in a state of being fixed to a housing and an electronic device including the same may be provided.

According to an embodiment of the disclosure, an electronic device capable of facilitating separation of a battery from a housing during battery replacement or battery repair may be provided.

However, problems to be solved by the disclosure are not limited to the above-mentioned problems, and may be variously extended without departing from the spirit and scope of the disclosure.

According to an embodiment of the disclosure, an electronic device capable of limiting or reducing torsion of an adhesive member when twisting occurs in a housing may be provided.

According to an embodiment of the disclosure, an electronic device including a film member capable of easily separating a battery so that replacement or repair of the battery is facilitated may be provided.

Effects obtainable from the disclosure are not limited to the effects mentioned above, and other effects not mentioned is clearly understood by those of ordinary skill in the art to which the disclosure belongs from the description below.

According to an embodiment of the disclosure, an electronic device 101 may include a first housing 310, a second housing 320, a first battery 371, or a first adhesive member 381. The first housing 310 may include a first side wall 313 or a first support member 311. The first support member 311 may be connected to the first side wall 313. The first battery 371 may be disposed inside the first housing 310. The first adhesive member 381 may be configured to adhere the first battery 371 to the first support member 311. The first adhesive member 381 may include a first outer portion 3814, a first inner portion 3815, or a first protruding portion 3812. The first outer portion 3814 may face the first side wall 313. The first inner portion 3815 may face opposite to the first outer portion 3814. The first protruding portion 3812 may protrude from the first outer portion 3814 toward the first side wall 313.

According to an embodiment, the first adhesive member 381 may further include a second protruding portion 3813. The second protruding portion 3813 may protrude from the first inner portion 3815. The second protruding portion 3813 may face opposite to the first protruding portion 3812.

According to an embodiment, the first adhesive member 381 may have a first width w1 or a second width w2. The first width w1 may be defined as a distance between the first outer portion 3814 and the first inner portion 3815. The second width w2 may be defined as a distance between the first protruding portion 3812 and the second protruding portion 3813. The second width w2 may be larger than the first width w1.

According to an embodiment, the first adhesive member 381 may further include at least one first curvature portion 3826, 3827. The at least one first curvature portion 3826, 3927 may connect the first outer portion 3814 and the first inner portion 3815.

According to an embodiment, the first adhesive member 381 may further include a first penetrating structure 3818. The first penetrating structure 3818 may be formed in at least a portion of the first adhesive member 381.

According to an embodiment, the electronic device may further include a first film member 391. The first film member 391 may surround at least a portion of the first battery 371.

According to an embodiment, the first film member 391 may surround at least a portion of at least three surfaces of the first battery 371.

According to an embodiment, at least a portion of the first film member 391 may be located between the first battery 371 and the first adhesive member 381.

According to an embodiment, the first film member 391 may include a 1-1st film area 3911, a 1-2nd film area 3912, or a 1-3rd film area 3913. The 1-1st film area 3911 may be disposed on a front surface of the first battery 371. The 1-1st film area 3911 may be located between the first support member 311 and the first adhesive member 381. The 1-2nd film area 3912 may extend from the 1-1st film area 3911. The 1-2nd film area 3912 may be at least partially disposed on at least a portion of a side surface of the first battery 371. The 1-3rd film area 3913 may extend from the 1-2nd film area 3912. The 1-3rd film area 3913 may be disposed on a rear surface of the first battery 371.

According to an embodiment, the first film member 391 may further include an adhesive area 3916 or a non-adhesive area 3918. The adhesive area 3916 may be disposed on the 1-2nd film area 3912. The non-adhesive area 3918 may be disposed on the 1-2nd film area 3912. The non-adhesive area 3918 may be spaced apart from the adhesive area 3916.

According to an embodiment, the electronic device may further include a hinge structure 231. The hinge structure 231 may be connected to the first housing 310 and the second housing 320. The second housing 320 may include a second side wall 323 or a second support member 321. The second support member 321 may be connected to the second side wall 323.

According to an embodiment, the electronic device may further include a second battery 372, a second adhesive member 382, or a second film member 392. The second battery 372 may be disposed inside the second housing 320. The second adhesive member 382 may be configured to adhere the second battery 372 to the second support member 321. The second film member 392 may surround at least a portion of the second battery 372.

According to an embodiment, a size of the first battery 371 may be different from a size of the second battery 372.

According to an embodiment, the second adhesive member 382 may include a second outer portion 3824, a second inner portion 3825, a third protruding portion 3822, or a fourth protruding portion 3823. The second outer portion 3824 may face the second side wall 323. The second inner portion 3825 may face opposite to the second outer portion 3824. The third protruding portion 3822 may protrude from the second outer portion 3824 toward the second side wall 323. The fourth protruding portion 3823 may protrude from the second inner portion 3825. The fourth protruding portion 3823 may face opposite to the third protruding portion 3822.

According to an embodiment, the fourth protruding portion 3823 may face the hinge structure 231.

According to an embodiment of the disclosure, an electronic device 101 may include a foldable housing 300, a flexible display 350, or a battery assembly 301, 302. The flexible display 350 may be disposed on the foldable housing 300. The battery assembly 301, 302 may be disposed inside the foldable housing 300. The battery assembly 301, 302 may include a battery 371, 372, an adhesive member 381, 382, or a film member 391, 392. The adhesive member 381, 382 may be configured to adhere the battery 371, 372 to the foldable housing 300. The film member 391, 392 may surround at least a portion of the battery 371, 372.

According to an embodiment, the adhesive member 381, 382 may have a first width w1, w3 or a second width w2, w4. The second width w2, w4 may be larger than the first width w1, w3.

According to an embodiment, the film member 391, 392 may surround at least three surfaces of the battery 371, 372.

According to an embodiment, the adhesive member 381, 382 may include a penetrating structure 3818, 3828. The adhesive member 381, 382 may be formed in at least a portion of the adhesive member 381, 382.

According to an embodiment, the film member 391, 392 may include an adhesive area 3916, 3926 or a non-adhesive area 3918, 3928. The non-adhesive area 3918, 3928 may be spaced apart from the adhesive area 3916, 3926.

While the disclosure has been shown and described with reference to exemplary embodiments thereof, it will be apparent to those of ordinary skill in the art that various changes in form and detail may be made thereto without departing from the spirit and scope of the disclosure as defined by the following claims.

## Claims

1. An electronic device (101) comprising:
a first housing (310) including a first side wall (313) and a first support member (311) connected to the first side wall (313);
a second housing (320);
a first battery (371) disposed inside the first housing (310); and
a first adhesive member (381) configured to adhere the first battery (371) to the first support member (311),
wherein the first adhesive member (381) includes:
a first outer portion (3814) facing the first side wall (313);
a first inner portion (3815) facing opposite to the first outer portion (3814); and
a first protruding portion (3812) protruding from the first outer portion (3814) toward the first side wall (313).

2. The electronic device of claim 1, wherein the first adhesive member (381) further includes a second protruding portion (3813) protruding from the first inner portion (3815) and facing opposite to the first protruding portion (3812).

3. The electronic device of claim 1 or 2, wherein the first adhesive member (381) has a first width (w1) defined as a distance between the first outer portion (3814) and the first inner portion (3815) and a second width (w2) defined as a distance between the first protruding portion (3812) and the second protruding portion (3813), and
wherein the second width (w2) is larger than the first width (w1).

4. The electronic device of any one of claims 1 to 3, wherein the first adhesive member (381) further includes at least one first curvature portion (3826, 3827) connecting the first outer portion (3814) and the first inner portion (3815).

5. The electronic device of any one of claims 1 to 4, wherein the first adhesive member (381) further includes a first penetrating structure (3818) formed in at least a portion of the first adhesive member (381).

6. The electronic device of any one of claims 1 to 5, further comprising a first film member (391) surrounding at least a portion of the first battery (371).

7. The electronic device of any one of claims 1 to 6, wherein the first film member (391) surrounds at least a portion of at least three surfaces of the first battery (371).

8. The electronic device of any one of claims 1 to 7, wherein at least a portion of the first film member (391) is located between the first battery (371) and the first adhesive member (381).

9. The electronic device of any one of claims 1 to 8, wherein the first film member (391) includes:
a 1-1st film area (3911) disposed on a front surface of the first battery (371) and located between the first support member (311) and the first adhesive member (381);
a 1-2nd film area (3912) extending from the 1-1st film area (3911) and at least partially disposed on at least a portion of a side surface of the first battery (371); and
a 1-3rd film area (3913) extending from the 1-2nd film area (3912) and disposed on a rear surface of the first battery (371).

10. The electronic device of any one of claims 1 to 9, wherein the first film member (391) further includes:
an adhesive area (3916) disposed on the 1-2nd film area (3912); and
a non-adhesive area (3918) disposed on the 1-2nd film area (3912) and spaced apart from the adhesive area (3916).

11. The electronic device of any one of claims 1 to 10, further comprising a hinge structure (231) connected to the first housing (310) and the second housing (320),
wherein the second housing (320) includes a second side wall (323) and a second support member (321) connected to the second side wall (323).

12. The electronic device of any one of claims 1 to 11, further comprising:
a second battery (372) disposed inside the second housing (320);
a second adhesive member (382) configured to adhere the second battery (372) to the second support member (321); and
a second film member (392) surrounding at least a portion of the second battery (372).

13. The electronic device of any one of claims 1 to 12, wherein a size of the first battery (371) is different from a size of the second battery (372).

14. The electronic device of any one of claims 1 to 13, wherein the second adhesive member (382) includes:
a second outer portion (3824) facing the second side wall (323);
a second inner portion (3825) facing opposite to the second outer portion (3824);
a third protruding portion (3822) protruding from the second outer portion (3824) toward the second side wall (323); and
a fourth protruding portion (3823) protruding from the second inner portion (3825) and facing opposite to the third protruding portion (3822).

15. The electronic device of any one of claims 1 to 14, wherein the fourth protruding portion (3823) faces the hinge structure (231).
